(19) Europäisches Patentamt
European Patent Office
Office européen des brevets

(11) **EP 3 036 076 B1**

(12) **EUROPÄISCHE PATENTSCHRIFT**

(45) Veröffentlichungstag und Bekanntmachung des Hinweises auf die Patenterteilung:
**11.10.2017 Patentblatt 2017/41**

(21) Anmeldenummer: **14752347.6**

(22) Anmeldetag: **18.08.2014**

(51) Int Cl.:
**B29C 45/14** (2006.01)    **C08J 5/10** (2006.01)

(86) Internationale Anmeldenummer:
**PCT/EP2014/067587**

(87) Internationale Veröffentlichungsnummer:
**WO 2015/024911 (26.02.2015 Gazette 2015/08)**

(54) **COMPOSITKUNSTSTOFFTEIL MIT VERBESSERTER WÄRMEALTERUNGSBESTÄNDIGKEIT**

COMPOSITE PLASTIC COMPONENT WITH IMPROVED HEAT-AGEING RESISTANCE

PIÈCE DE MATIÈRE PLASTIQUE COMPOSITE DOTÉE D'UNE MEILLEURE RÉSISTANCE AU VIEILLISSEMENT THERMIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.08.2013 EP 13181151**

(43) Veröffentlichungstag der Anmeldung:
**29.06.2016 Patentblatt 2016/26**

(73) Patentinhaber: **BASF SE**
**67056 Ludwigshafen am Rhein (DE)**

(72) Erfinder:
• **HABRAKEN, Gijsbrecht**
**Budd Lake, New Jersey 07828 (US)**
• **PRUSTY, Manoranjan**
**Kuruchikuppam**
**Puducherry 605012 (IN)**
• **RADTKE, Andreas**
**68161 Mannheim (DE)**
• **KASALIWAL, Gaurav Ramanlal**
**400705 Thurbe (IN)**

(56) Entgegenhaltungen:
**WO-A1-2012/058345    US-A1- 2012 004 353**

**EP 3 036 076 B1**

**Beschreibung**

Die vorliegende Erfindung betrifft ein Compositkunststoffteil (CK), das eine erste Kunststoffkomponente (K1) und gegebenenfalls eine zweite Kunststoffkomponente (K2) aufweist und ein Polyethylenimin (PEI) zur Verbesserung der Wärmealterungsbeständigkeit des Compositkunststoffteils enthält. Weiterhin betrifft die vorliegende Erfindung ein Verfahren zur Herstellung dieses Compositkunststoffteils (CK), ein Verfahren zur Verbesserung Wärmealterungsbeständigkeit des Compositkunststoffteils sowie die Verwendung von Polyethylenimin (PEI) zur Verbesserung der Wärmealterungsbeständigkeit des Compositkunststoffteils.

Faserverstärkte Kunststoffe haben sich seit einigen Jahren als Werkstoffe etabliert, die in vielen Anwendungsbereichen als Ersatz für Metallteile eingesetzt werden. Faserverstärkte flächige Kunststoffe werden daher auch als Organobleche bezeichnet. Durch den Einsatz von faserverstärkten Kunststoffen sollen das Gewicht der eingesetzten Werkstoffe und die Herstellungskosten der Werkstoffe reduziert werden. In faserverstärkten Kunststoffteilen wird üblicherweise eine Glas-, Kohlenstoff- oder Aramidfaser in Form eines Geleges oder eines Gewebes von einem Polymer umschlossen. Die so erhaltenen faserverstärkten Kunststoffteile sind kostengünstig herstellbar, sind gegenüber vergleichbaren Metallteilen leicht und zeichnen sich durch gute mechanische Eigenschaften aus.

Für die ersten faserverstärkten Kunststoffteile wurden als Polymerkomponenten duroplastische Polymere eingesetzt. Um eine größere Gestaltungsfreiheit hinsichtlich der Verarbeitung und Weiterverarbeitung sowie der mit faserverstärkten Kunststoffen herstellbaren Formteile zu erreichen, wurden faserverstärkte Kunststoffe entwickelt, die Thermoplasten als Polymerkomponente enthalten.

Zur Herstellung solcher faserverstärkter Formteile werden beispielsweise thermoplastische Polyamide wie PA6 oder PA66 in Form von glasfaserverstärkten Formmassen eingesetzt. Die Formmassen werden hierzu beispielsweise durch Spritzgießen in einem allseitig geschlossenen Formwerkzeug geformt, wodurch die eigentlichen Formteile, d.h. die faserverstärkten Kunststoffteile erhalten werden. Solche Formteile werden häufig als Konstruktionswerkstoffe für Bauteile eingesetzt, die während ihrer Lebensdauer erhöhten Temperaturen ausgesetzt sind. Hierdurch werden die Formteile thermooxidativ geschädigt. Durch die thermooxidative Schädigung verschlechtern sich beispielsweise die mechanischen Eigenschaften der Formteile sowie deren optisches Erscheinungsbild. Die WO 2010/076145 beschreibt thermoplastische Formmassen mit verbesserter Wärmealterungsstabilität (WAB). Die in der WO 2010/076145 beschriebenen thermoplastischen Formmassen weisen neben einem Polyamid und einem Fasermaterial zur Verstärkung Polyethylenimin und Eisenpulver auf. Auch die WO 2011/051123 beschreibt thermoplastische Formmassen mit verbesserter Wärmealterungsstabilität (WAB), die neben einem Polyamid und optional einem Fasermaterial zur Verstärkung Eisenpulver mit einer Teilchengröße von maximal 10 $\mu$m ($D_{50}$-Wert) enthalten. Die in WO 2010/076145 und WO 2011/051123 beschriebenen Formmassen werden zu Formteilen weiterverarbeitet, die bereits gute Wärmealterungsbeständigkeiten (WAB) aufweisen. Compositkunststoffteile, die als erste Kunststoffkomponente eine faserverstärkte Matrixzusammensetzung sowie eine Oberflächenzusammensetzung enthalten, und gegebenenfalls eine daran angeformte zweite Kunststoffkomponente enthalten, sind in WO 2010/076145 und WO 2011/051123 nicht offenbart.

Um die Gestaltungsfreiheit und die konstruktiven Möglichkeiten weiter zu erhöhen, können faserverstärkte Kunststoffe durch Schweißen und Umspritzen weiter verarbeitet werden, um Compositkunststoffteile herzustellen, die als erste Kunststoffkomponente eine faserverstärke Matrixzusammensetzung und eine Oberflächenzusammensetzung enthalten, und gegebenenfalls eine zweite Kunststoffkomponente enthalten. Das Schweißen und Umspritzen von endlosfaserverstärkten flächigen Kunststoffteilen ist beispielsweise in Marco Wacker et.al., "Schweißen und Umspritzen von Organoblechen", KU-Kunststoffe, Karl Hanser Verlag München, Jahrgang 92 (2002), 6 beschrieben. Durch die dort beschriebenen Verfahren zum Hinter- beziehungsweise Umspritzen können Funktionselemente an die faserverstärkten flächigen Kunststoffteile angebracht werden. Hierzu wird der faserverstärkte flächige Kunststoff vor dem Einlegen in das Formwerkzeug vorgeheizt und anschließend mit einem zweiten Polymer umspritzt.

Um eine gute Verbindung zwischen dem ersten Kunststoffteil und dem zweiten Polymer, das in das Formwerkzeug eingespritzt wird, zu erzielen, ist es wie vorstehend beschrieben, notwendig, das erste Kunststoffelement vorzuwärmen. Für das Vorwärmen können beispielsweise Infrarotstrahler oder Öfen eingesetzt werden. Durch das Vorwärmen wird das erste Kunststoffelement erweicht und gegebenenfalls an der Oberfläche angeschmolzen. Die Erwärmung kann dabei außerhalb des Formwerkzeugs erfolgen. Es ist auch möglich, die Erwärmung direkt im Formwerkzeug durchzuführen. Hierdurch können Verformungen des erweichten ersten Kunststoffelements vermieden werden.

Um eine ausreichend große Festigkeit der Verbindung (Adhäsion) zwischen dem ersten Kunststoffelement und dem zweiten Kunststoffelement zu erreichen, ist ein ausreichend tiefes Anschmelzen der Oberfläche des ersten Kunststoffelements notwendig, damit eine stabile Schweißverbindung entsteht. Aufgrund der bevorzugten Erwärmung des ersten Kunststoffelements im Formwerkzeug ist eine hohe Taktzeit erforderlich, bis das fertige Formteil aus dem Formwerkzeug entnommen werden kann, da eine Entnahme in der Regel erst dann möglich ist, wenn das Polymer des ersten Kunststoffelements sowie die Polymere, die als Komponente des zweiten Kunststoffelements in das Formteil eingespritzt werden, soweit erstarrt sind, dass das Formteil formstabil ist. Hierzu wird das Formwerkzeug vor der Entnahme des fertigen Formteils üblicherweise gekühlt.

Die vorstehend beschriebenen Compositkunststoffteile weisen jedoch keine zufriedenstellende Wärmealterungsbeständigkeit auf.

Compositkunststoffteile mit verbesserter Wärmealterungsbeständigkeit sind beispielsweise in WO 2012/058366, WO 2012/058359 und WO 2012/058379 beschrieben. Diese Compositkunststoffteile weisen dabei eine Kombination aus einem Oberflächen- und einem Matrix-Wärmestabilisator auf. Der erste Wärmestabilisator ist dabei kupferbasiert, wobei Kupferhalogenide oder Kupferacetat in Kombination mit Alkalimetallhalogeniden bevorzugt sind. Als zweiter Wärmestabilisator kommt ein mehrwertiger Alkohol zum Einsatz, wobei Dipentaerythrit, Tripentaerythrit, Pentaerythrit und Mischungen dieser Alkohole bevorzugt sind.

Die in WO 2012/058366, WO 2012/058359 und WO 2012/058379 beschriebenen Compositkunststoffteile sind im Hinblick auf ihre Wärmealterungsbeständigkeit noch verbesserungsbedürftig.

Der vorliegenden Erfindung liegt somit die Aufgabe zugrunde, ein Compositkunststoffteil (CK) bereitzustellen, das gegenüber den im Stand der Technik beschriebenen Compositkunststoffteilen eine verbesserte oder zumindest gleichwertige Wärmealterungsbeständigkeit aufweist. Das Compositkunststoffteil soll einfach und kostengünstig herstellbar sein und gute mechanische Eigenschaften aufweisen. Darüber hinaus soll das Compositkunststoffteil eine gute Adhäsion zwischen der ersten und der zweiten Kunststoffkomponente aufweisen.

Gelöst wird die Aufgabe durch ein Compositkunststoffteil (CK) enthaltend

i) eine erste Kunststoffkomponente (K1) enthaltend

ia) eine Matrixzusammensetzung (MZ), die ein Polyamidmatrixpolymer (PAM) und mindestens ein erstes Fasermaterial (F1) zur Verstärkung enthält, und

ib) eine Oberflächenzusammensetzung (OZ), die ein Polyamidoberflächenpolymer (PAO) enthält und eine Oberfläche von K1 bildet,

wobei
die Oberflächenzusammensetzung (OZ) ein Polyethylenimin (PEI) zur Verbesserung der Wärmealterungsbeständigkeit des Compositkunststoffteils (CK) enthält und wobei die Matrixzusammensetzung (MZ) kein Polyethylenimin (PEI) enthält.

Gegenstand der vorliegenden Erfindung ist außerdem ein Compositkunststoffteil (CK) enthaltend

i) eine erste Kunststoffkomponente (K1) enthaltend

ia) eine Matrixzusammensetzung (MZ), die ein Polyamidmatrixpolymer (PAM) und mindestens ein erstes Fasermaterial (F1) zur Verstärkung enthält, und

ib) eine Oberflächenzusammensetzung (OZ), die ein Polyamidoberflächenpolymer (PAO) enthält und eine Oberfläche von K1 bildet,

wobei
die Oberflächenzusammensetzung (OZ) ein Polyethylenimin (PEI) zur Verbesserung der Wärmealterungsbeständigkeit des Compositkunststoffteils (CK) enthält.

Es wurde überraschend festgestellt, dass die Verwendung von Polyethylenimin (PEI) in der Oberflächenzusammensetzung (OZ) zu einer Verbesserung der Wärmealterungsbeständigkeit (WAB) des Compositkunststoffteils (CK) führt. Die erfindungsgemäßen Compositkunststoffteile (CK) weisen somit gute mechanische Eigenschaften, insbesondere eine sehr gute Wärmealterungsbeständigkeit (WAB) auf. Die Compositkunststoffteile (CK) sind einfach und kostengünstig herstellbar.

Gegenstand der vorliegenden Erfindung ist somit auch ein Verfahren zur Herstellung eines Compositkunststoffteils (CK), umfassend die folgenden Schritte

a) Bereitstellen einer ersten Kunststoffkomponente (K1) enthaltend

ia) eine Matrixzusammensetzung (MZ), die ein Polyamidmatrixpolymer (PAM) und mindestens ein erstes Fasermaterial (F1) zur Verstärkung enthält,

und

ib) eine Oberflächenzusammensetzung (OZ), die ein Polyamidoberflächenpolymer (PAO) enthält und eine Oberfläche von K1 bildet,

und

b) Anformen einer zweiten Kunststoffkomponente (K2), die ein Polyamidanformungspolymer (PAA) enthält, an die Oberfläche von K1,

wobei
OZ und gegebenenfalls K2 ein Polyethylenimin (PEI) zur Verbesserung der Wärmealterungsbeständigkeit des Compositkunststoffteils (CK) enthält.

Weiterhin Gegenstand der vorliegenden Erfindung ist auch die Verwendung von Polyethylenimin (PEI) zur Verbesserung der Wärmealterungsbeständigkeit (WAB) eines Compositkunststoffteils (CK), wobei CK

i) eine erste Kunststoffkomponente (K1) enthaltend

ia) eine Matrixzusammensetzung (MZ), die ein Polyamid matrixpolymer (PAM) und mindestens ein erstes Fasermaterial (F1) zur Verstärkung enthält,

und

ib) eine Oberflächenzusammensetzung (OZ), die ein Polyamidoberflächenpolymer (PAO) enthält und eine Oberfläche von K1 bildet,

wobei
die Oberflächenzusammensetzung (OZ) ein Polyethylenimin (PEI) zur Verbesserung der Wärmealterungsbeständigkeit des Compositkunststoffteils (CK) enthält.

Weiterhin Gegenstand der vorliegenden Erfindung ist ein Compositkunststoffteil (CK), das eine zweite Kunststoffkomponente (K2) enthält, die an die Oberfläche der ersten Kunststoffkomponente (K1) angeformt ist. Gegenstand der vorliegenden Erfindung ist somit auch ein Compositkunststoffteil (CK) enthaltend

i) eine erste Kunststoffkomponente (K1) enthaltend

ia) eine Matrixzusammensetzung (MZ), die ein Polyamidmatrixpolymer (PAM) und mindestens ein erstes Fasermaterial (F1) zur Verstärkung enthält,
und

ib) eine Oberflächenzusammensetzung (OZ), die ein Polyamidoberflächenpolymer (PAO) enthält und eine Oberfläche von K1 bildet, und

ii) eine zweite Kunststoffkomponente (K2), die ein Polyamidanformungspolymer (PAA) enthält und an die Oberfläche von K1 angeformt ist,

wobei
OZ ein Polyethylenimin (PEI) zur Verbesserung der Wärmealterungsbeständigkeit des Compositkunststoffteils (CK) enthält.

Gegenstand der vorliegenden Erfindung ist außerdem ein Verfahren zur Verbesserung der Wärmealterungsbeständigkeit eines Compositkunststoffteils (CK) gemäss Anspruch 15, umfassend die folgenden Schritte

a) Bereitstellen einer ersten Kunststoffkomponente (K1) enthaltend

ia) eine Matrixzusammensetzung (MZ), die ein Polyamidmatrixpolymer (PAM) und mindestens ein erstes Fasermaterial (F1) zur Verstärkung enthält,
und

ib) eine Oberflächenzusammensetzung (OZ), die ein Polyamidoberflächenpolymer (PAO) enthält und eine Oberfläche von K1 bildet,

und

b) Anformen einer zweiten Kunststoffkomponente (K2), die ein Polyamidanformungspolymer (PAA) enthält, an die Oberfläche von K1,

wobei

die Oberflächenzusammensetzung (OZ) ein Polyethylenimin (PEI) zur Verbesserung der Wärmealterungsbeständigkeit des Compositkunststoffteils (CK) enthält.

In einer bevorzugten Ausführungsform des Verfahrens zur Herstellung eines Compositkunststoffteils (CK), der Verwendung von Polyethylenimin (PEI) zur Verbesserung der Wärmealterungsbeständigkeit (WAB), des Compositkunststoffteils (CK) und des Verfahrens zur Verbesserung der Wärmealterungsbeständigkeit (WAB) des Compositkunststoffteils (CK) enthält die Matrixzusammensetzung (MZ) kein Polyethylenimin (PEI).

Die nachfolgenden Ausführungen und Bevorzugungen im Hinblick auf das Compositkunststoffteil (CK) gelten für das Verfahren zu dessen Herstellung, die Verwendung von Polyethylenimin (PEI) zur Verbesserung der Wärmealterungsbeständigkeit sowie das Verfahren zur Verbesserung der Wärmealterungsbeständigkeit entsprechend.

## Compositkunststoffteil (CK); Erste Kunststoffkomponente (K1)

Die erste Kunststoffkomponente (K1) wird nachfolgend auch verkürzt als K1 bezeichnet. Die Matrixzusammensetzung (MZ) wird nachfolgend auch verkürzt als MZ bezeichnet. Das Polyamidmatrixpolymer (PAM) wird nachfolgend auch verkürzt als PAM bezeichnet. Das erste Fasermaterial (F1) wird nachfolgend auch verkürzt als F1 bezeichnet. Die Oberflächenzusammensetzung (OZ) wird nachfolgend auch verkürzt als OZ bezeichnet. Das Polyamidoberflächenpolymer (PAO) wird nachfolgend auch verkürzt als PAO bezeichnet.

### Matrixzusammensetzung (MZ)

Die Matrixzusammensetzung (MZ) enthält ein Polyamidmatrixpolymer (PAM) und mindestens ein erstes Fasermaterial (F1) zur Verstärkung. Unter dem Begriff "ein Polyamidmatrixpolymer (PAM)" wird vorliegend sowohl genau ein Polyamidmatrixpolymer (PAM) als auch Mischungen aus zwei oder mehreren Polyamidmatrixpolymeren (PAM) verstanden. Gleiches gilt für den Begriff "mindestens ein erstes Fasermaterial (F1)". Hierunter wird erfindungsgemäß sowohl genau ein erstes Fasermaterial (F1) als auch Mischungen aus zwei oder mehreren Fasermaterialien (F1) verstanden.

### Polyamidmatrixpolymer (PAM)

Als Polyamidmatrixpolymer (PAM) kann, wie vorstehend ausgeführt, genau ein Polyamidmatrixpolymer (PAM) eingesetzt werden. Es ist auch möglich, Mischungen aus zwei oder mehr Polyamidmatrixpolymeren (PAM) einzusetzen. Geeignete Polyamidmatrixpolymere (PAM) weisen im Allgemeinen eine Viskositätszahl von 90 bis 350, vorzugsweise von 110 bis 240 ml/g auf. Die Bestimmung der Viskositätszahl erfolgt dabei aus einer 0,5-Gew.-%igen Lösung des Polyamidmatrixpolymers (PAM) in 96-gew.-%iger Schwefelsäure bei 25 °C gemäß ISO 307.

Als Polyamidmatrixpolymere (PAM) sind halbkristalline oder amorphe Polyamide bevorzugt. Geeignete Polyamidmatrixpolymere (PAM) weisen ein gewichtsmittleres Molekulargewicht ($M_W$) im Bereich von 500 bis 2 000 000 g/mol auf. Das mittlere Molekulargewicht($M_W$) wird bestimmt gemäß AMST D4001.

Als Polyamidmatrixpolymere (PAM) sind beispielsweise Polyamide geeignet, die sich von Lactamen mit 7 bis 13 Ringgliedern ableiten. Als Polyamidmatrixpolymer (PAM) sind weiterhin Polyamide geeignet, die durch Umsetzung von Dicarbonsäuren mit Diaminen erhalten werden.

Als Polyamide, die sich von Lactamen ableiten, seien beispielhaft Polyamide erwähnt, die sich von Polycaprolactam, Polycapryllactam und/oder Polylaurinlactam ableiten.

Für den Fall, dass Polyamide eingesetzt werden, die aus Dicarbonsäuren und Diaminen erhältlich sind, können als Dicarbonsäuren Dicarbonsäurealkane mit 6 bis 36 Kohlenstoffatomen, bevorzugt 6 bis 12 Kohlenstoffatomen, eingesetzt werden. Darüber hinaus sind aromatische Dicarbonsäuren geeignet.

Beispielhaft seien hier Adipinsäure, Azelainsäure, Sebacinsäure, Dodecandicarbonsäure sowie Terephthalsäure und/oder Isophtalsäure als Dicarbonsäuren genannt.

Als Diamine eigenen sich beispielsweise Alkandiamine mit 4 bis 36 Kohlenstoffatomen, insbesondere Alkandiamine mit 6 bis 12 Kohlenstoffatomen sowie aromatische Diamine, wie beispielsweise m-Xylylendiamin, Di-(4-aminophenyl)methan, Di-(4-aminocyclohexyl)-methan, 2,2-Di-(4-aminophenyl)-propan, 2,2-Di-(4-aminocyclohexyl)-propan oder 1,5-diamino-2-methyl-pentan.

Bevorzugte als Polyamidmatrixpolymere (PAM) sind Polyhexamethylenadipinsäureamid, Polyhexamethylensebacinsäureamid und Polycaprolactam sowie Copolyamid 6/66 geeignet, insbesondere mit einem Anteil von 5 bis 95 Gew.-% an Caprolactam-Einheiten.

Weiterhin sind als PAM Polyamide geeignet, die durch Copolymerisation zweier oder mehrerer der vorstehend und nachstehend genannten Monomeren erhältlich sind, oder Mischungen mehrerer Polyamide, wobei das Mischungsverhältnis beliebig ist. Besonders bevorzugt sind Mischungen von Polyamid 66 mit anderen Polyamiden, insbesondere Copolyamid 6/66.

Weiterhin haben sich als PAM teilaromatische Copolyamide wie PA 6/6T und PA 66/6T als besonders vorteilhaft erwiesen, deren Triamingehalt weniger als 0,5, vorzugsweise weniger als 0,3 Gew.-% beträgt.

Die Herstellung solcher teilaromatischer Copolyamide mit niedrigem Triamingehalt kann nach den in den EP-A 129 195 und 129 196 beschriebenen Verfahren erfolgen.

Die nachfolgende nicht abschließende Aufstellung enthält die vorstehend genannten, sowie weitere Polyamide, die als PAM geeignet sind sowie und die enthaltenen Monomere.

AB-Polymere:

| PA 4 | Pyrrolidon |
| PA 6 | ε-Caprolactam |
| PA 7 | Ethanolactam |
| PA 8 | Capryllactam |
| PA 9 | 9-Aminopelargonsäure |
| PA 11 | 11-Aminoundecansäure |
| PA 12 | Laurinlactam |

AA/BB-Polymere:

| PA 46 | Tetramethylendiamin, Adipinsäure |
| PA 66 | Hexamethylendiamin, Adipinsäure |
| PA 69 | Hexamethlyendiamin, Azelainsäure |
| PA 610 | Hexamethylendiamin, Sebacinsäure |
| PA 612 | Hexamethylendiamin, Decandicarbonsäure |
| PA 613 | Hexamethylendiamin, Undecandicarbonsäure |
| PA 1212 | 1,12-Dodecandiamin, Decandicarbonsäure |
| PA 1313 | 1,13-Diaminotridecan, Undecandicarbonsäure |
| PA 6T | Hexamethylendiamin, Terephthalsäure |
| PA MXD6 | m-Xylyendiamin, Adipinsäure |

| PA 6I | Hexamethylendiamin, Isophthalsäure |
| PA 6-3-T | Trimethylhexamethylendiamin, Terephthalsäure |
| PA 6/6T | (siehe PA 6 und PA 6T) |
| PA 6/66 | (siehe PA 6 und PA 66) |
| PA 6/12 | (siehe PA 6 und PA 12) |
| PA 66/6/610 | (siehe PA 66, PA 6 und PA 610) |
| PA 6I/6T | (siehe PA 6I und PA 6T) |
| PA PACM 12 | Diaminodicyclohexylmethan, Laurinlactam |
| PA 6I/6T/PACM | wie PA 6I/6T + Diaminodicyclohexylmethan |
| PA 12/MACMI | Laurinlactam, Dimethyl-diaminodicyclohexylmethan, Isophthalsäure |
| PA 12/MACMT | Laurinlactam, Dimethyl-diaminodicyclohexylmethan, Terephthalsäure |
| PA PDA-T | Phenylendiamin, Terephthalsäure |

Gegenstand der vorliegenden Erfindung ist somit auch ein Compositkunststoffteil (CK) in dem das Polyamidmatrixpolymer (PAM) mindestens ein Polyamid ist, ausgewählt aus der Gruppe bestehend aus PA 4, PA 6, PA 7, PA 8, PA 9, PA 11, PA 12, PA 46, PA 66, PA 69, PA 610, PA 612, PA 613, PA 1212, PA1313, PA 6T, PA MXD6, PA 6I, PA 6-3-T, PA 6/6T, PA 6/66, PA 6/12, PA 66/6/610, PA 6I/6T, PA PACM 12, PA 6I/6T/PACM, PA 12/MACMI, PA 12/MACMT, PA PDA-T und Copolyamide aus zwei oder mehreren der vorstehend genannten Polyamide.

Bevorzugt ist das Polyamidmatrixpolymer (PAM) ein Polyamid ausgewählt aus der Gruppe bestehend aus PA6, PA66 und Copolyamiden aus PA6 und PA66.

Bevorzugt ist das Polyamidmatrixpolymer (PAM) PA6.

In einer weiteren bevorzugten Ausführungsform ist das Polyamidmatrixpolymer (PAM) PA66.

In einer weiteren bevorzugten Ausführungsform ist das Polyamidmatrixpolymer (PAM) PA6/66.

Das PAM kann darüber hinaus weitere übliche Additive enthalten, wie beispielsweise Schlagzähmodifizierer, Schmiermittel, UV-Stabilisatoren und Prozessstabilisatoren.

*Erstes Fasermaterial (F1)*

Als geeignete Materialien für das erste Fasermaterial (F1) seien beispielhaft Kohlenstofffasern, Glasfasern, Aramidfasern, Kaliumtitanatfasern, Borfasern, mineralische Fasern (wie beispielsweise Basaltfasern) und metallische Fasern (wie beispielsweise Stahlfasern oder Kupferfasern) genannt.

Als erstes Fasermaterial (F1) ist ein Endlosfasermaterial bevorzugt.

Gegenstand der vorliegenden Erfindung ist somit auch ein Compositkunstoffteil (CK), bei dem das erste Fasermaterial (F1) ein Endlosfasermaterial ist.

Die Begriffe "Endlosfasermaterial" und "Endlosfaser" werden nachfolgend synonym gebraucht. Unter einer Endlosfaser wird vorliegend ein linienförmiges Gebilde gemäß DIN 60 000 von praktisch unbegrenzter Länge verstanden, das sich textil verarbeiten lässt. Eine Endlosfaser wird auch als Filament bezeichnet. Der Begriff Filament wird in der Textiltechnik verwendet. Unter Filament (Endlosfaser) wird demnach eine auf chemischem oder technischem Weg erzeugte, praktisch endlose, Faser gemäß DIN 60 001 T 2 (Dezember 1974) verstanden.

Für den Fall, dass als erstes Fasermaterial (F1) ein Endlosfasermaterial eingesetzt wird, sind Endlosglasfasern bevorzugt. Die Endlosfasern können dabei in Form eines Gestrickes, eines Gewirkes oder eines Gewebes eingesetzt werden. Es ist auch möglich, uni-direktionale Endlosfasern einzusetzen. Solche einfädigen Endlosfasern werden auch als Monofil bezeichnet. Für den Fall, dass uni-direktionale Endlosfasern eingesetzt werden, wird eine Vielzahl parallel zueinander eingesetzter Endlosglasfasern eingesetzt. Bevorzugt werden in diesem Fall uni-direktionale Lagen parallel zueinander ausgerichteter Endlosfasern eingesetzt.

Darüber hinaus ist es möglich, bi-direktionale oder mehr-direktionale Lagen von Endlosfasern einzusetzen. In diesem Fall weist das erste Fasermaterial (F1) eine elementare uni-direktionale Schicht (UD-Schicht) auf. Oberhalb und/oder unterhalb der elementaren UD-Schicht ist eine weitere UD-Schicht angeordnet, in der die Richtung der Endlosfasern um beispielsweise 90° zur Faserrichtung der elementaren UD-Schicht verdreht ist. Bei mehr-direktionalen Schichten enthält das erste Fasermaterial (F1) mehrere Schichten (beispielsweise drei, vier, fünf oder sechs Schichten) bei denen die Richtungen der Faser der jeweiligen Schichten jeweils um beispielsweise 90° zueinander verdreht sind. Der Winkel, mit dem die einzelnen uni-direktionalen Schichten bei bi- beziehungsweise mehr-direktionalen Schichten zueinander verdreht sind, kann in weiten Bereichen variieren, beispielsweise im Bereich von $\pm$ 10° bis $\pm$ 90°.

Für den Fall, dass als erstes Fasermaterial (F1) die bevorzugten Endlosfasern eingesetzt werden, können die Endlosfasern jeweils einzeln eingesetzt werden. Es ist auch möglich, die Endlosfasern jeweils einzeln zu verweben oder einzelne Endlosfaserbündel miteinander zu verweben. Die Endlosfasern können darüber hinaus in Form eines Vlieses oder eines Filzes eingesetzt werden. Geeignete Endlosfasermaterialien sind dem Fachmann bekannt. Besonders bevorzugte Endlosfasermaterialien sind Glasfasern und Kohlenstofffasern. Insbesondere bevorzugt sind Endlosglasfasern und Endloskohlenstofffasern mit einem Faserdurchmesser im Bereich von 9 bis 34 $\mu$m.

Die Matrixzusammensetzung (MZ) kann neben dem Polyamidmatrixpolymer (PAM) und dem ersten Fasermaterial (F1) weitere übliche Additive enthalten. Geeignete Additive sind beispielsweise UV-Stabilisatoren, Schmiermittel, Nukleirungsmittel, Farbstoffe, Weichmacher. Geeignete weiter Additive sind beispielsweise in der WO 2010/076145 beschrieben.

Auch die Oberflächenzusammensetzung (OZ) sowie die zweite Kunststoffkomponente (K2) können weitere übliche Additive enthalten, wie sie beispielsweise in der WO 2010/076145 beschrieben sind.

Die weiteren Additive sind im Allgemeinen in Mengen von 0 bis 5 Gew-%, bezogen auf das Gesamtgewicht des Polyamidmatrixmaterials (PAM) in der Matrixzusammensetzung (MZ), enthalten bzw. bezogen auf das Gesamtgewicht des Polyamidoberflächenpolymers (PAO) in der Oberflächenzusammensetzung (OZ) oder bezogen auf das Gesamtgewicht des Polyamidanformungspolymers (PAA) der zweiten Kunststoffkomponente (K2). Die Matrixzusammensetzung (MZ) kann darüber hinaus ebenfalls ein Polyethylenimin (PEI) enthalten.

Gegenstand der vorliegenden Erfindung ist somit auch ein Compositkunststoffteil (CK) welches in der Matrixzusammensetzung (MZ) ein Polyethylenimin (PEI) enthält. Weiterhin Gegenstand der vorliegenden Erfindung ist ein Compositkunststoffteil (CK), das in der Oberflächenzusammensetzung (OZ) in der Matrixzusammensetzung (MZ) und in der zweiten Kunststoffkomponente (K2) ein Polyethylenimin (PEI) enthält.

In einer weiteren Ausführungsform enthalten OZ, MZ und K2 das gleiche Polyethylenimin (PEI).

Es wurde überraschend gefunden, dass die Matrixzusammensetzung (MZ) nicht zwingend ein Polyethylenimin (PEI) enthalten muss, um ein Compositkunststoffteil (CK) zu erhalten, das eine gute Wärmealterungsbeständigkeit aufweist. Compositkunststoffteile (CK), die nur in der Oberflächenzusammensetzung (OZ) sowie gegebenenfalls in der optional angeformten zweiten Kunststoffkomponente (KZ) ein Polyethylenimin (PEI) enthalten, weisen Wärmealterungsbeständigkeiten auf, die mit Compositkunststoffteilen (CK) vergleichbar sind, die sowohl in der Oberflächenzusammensetzung (OZ) sowie gegebenenfalls in der optional angeformten Kunststoffkomponente (K2) als auch in der Matrixzusammensetzung (MZ) ein Polyethylenimin (PEI) aufweisen.

Gegenstand der vorliegenden Erfindung ist somit auch ein Compositkunststoffteil (CK), in dem die Matrixzusammensetzung (MZ) kein Polyethylenimin (PEI) enthält.

Hierdurch lassen sich die Herstellungskosten des Compositkunststoffteils (CK) senken. Unter dem Begriff "kein Polyethylenimin (PEI) enthält" wird erfindungsgemäß verstanden, dass der Matrixzusammensetzung (MZ) kein Polyethylenimin (PEI) zugegeben wird. Die Matrixzusammensetzung (MZ) kann jedoch geringe Mengen an Polyethylenimin (PEI) enthalten, die während des Herstellungsprozesses des Compositkunststoffteils (CK) aus der Oberflächenzusammensetzung (OZ) in die Matrixzusammensetzung (MZ) übergehen. Für den Fall, dass die Matrixzusammensetzung (MZ) kein Polyethylenimin (PEI) enthält, enthält die Matrixzusammensetzung (MZ) maximal 5 Gew.-%, bevorzugt maximal 1 Gew.-% und insbesondere bevorzugt maximal 0,1 Gew.-% der Gesamtmenge des im Compositkunststoffteil (CK) enthaltenen Polyethylenimins (PEI).

Das Compositkunststoffteil (CK) kann neben Polyethylenimin (PEI) Eisenpulver (CIP) enthalten. Durch die Kombination von Polyethylenimin (PEI) und Eisenpulver (CIP) werden Compositkunststoffteile (CK) erhalten, deren Wärmealterungsbeständigkeit noch weiter verbessert ist. Für das Eisenpulver (CIP) gelten die vorstehenden Ausführungen und Bevorzugungen im Hinblick auf das Polyethylenimin (PEI) entsprechend.

Gegenstand der vorliegenden Erfindung ist somit auch ein Compositkunststoffteil (CK) welches in der Matrixzusammensetzung (MZ) Eisenpulver (CIP) enthält. Weiterhin Gegenstand der vorliegenden Erfindung ist ein Compositkunststoffteil (CK), das in der Oberflächenzusammensetzung (OZ) in der Matrixzusammensetzung (MZ) und in der zweiten Kunststoffkomponente (K2) Eisenpulver (CIP) enthält.

Es wurde überraschend gefunden, dass die Matrixzusammensetzung (MZ) nicht zwingend Eisenpulver (CIP) enthalten muss, um ein Compositkunststoffteil (CK) zu erhalten, das eine gute Wärmealterungsbeständigkeit aufweist. Compositkunststoffteile (CK), die nur in der Oberflächenzusammensetzung (OZ) sowie gegebenenfalls in der optional angeformten zweiten Kunststoffkomponente (KZ) Eisenpulver (CIP) enthalten, weisen Wärmealterungsbeständigkeiten auf, die mit Compositkunststoffteilen (CK) vergleichbar sind, die sowohl in der Oberflächenzusammensetzung (OZ) sowie gegebenenfalls in der optional angeformten Kunststoffkomponente (K2) als auch in der Matrixzusammensetzung (MZ) Eisenpulver (CIP) aufweisen.

Gegenstand der vorliegenden Erfindung ist somit auch ein Compositkunststoffteil (CK), in dem die Matrixzusammensetzung (MZ) kein Eisenpulver (CIP) enthält.

Hierdurch lassen sich die Herstellungskosten des Compositkunststoffteils (CK) weiter senken. Unter dem Begriff "kein Eisenpulver (CIP) enthält" wird erfindungsgemäß verstanden, dass der Matrixzusammensetzung (MZ) kein Eisenpulver (CIP) zugegeben wird. Die Matrixzusammensetzung (MZ) kann jedoch geringe Mengen an Eisenpulver (CIP) enthalten, die während des Herstellungsprozesses des Compositkunststoffteils (CK) aus der Oberflächenzusammensetzung (OZ) in die Matrixzusammensetzung (MZ) übergehen. Für den Fall, dass die Matrixzusammensetzung (MZ) kein Eisenpulver (CIP) enthält, enthält die Matrixzusammensetzung (MZ) maximal 5 Gew.-%, bevorzugt maximal 1 Gew.-% und insbesondere bevorzugt maximal 0,1 Gew.-% der Gesamtmenge des im Compositkunststoffteil (CK) enthaltenen Eisenpulvers (CIP).

Die Wärmealterungsbeständigkeit (WAB) wird bestimmt durch Lagerung des Compositkunststoffteils (CK) bei erhöhten Temperaturen, wobei vor und nach der Lagerung die mechanischen Eigenschaften des Compositkunststoffteils (CK) bestimmt werden. Als Kenngröße für die mechanischen Eigenschaften wird die Biegefestigkeit des Compositkunststoffteils (CK) gemessen. Die Lagerung bei erhöhter Temperatur wird dabei im Umluftofen durchgeführt. Die Biegefestigkeit wird dabei gemäß DIN EN ISO 14125:2011 gemessen.

Oberflächenzusammensetzung (OZ)

Die Oberflächenzusammensetzung (OZ) enthält ein Polyamidoberflächenpolymer (PAO) und bildet eine Oberfläche der ersten Kunststoffkomponente (K1). Unter dem Begriff "eine Oberfläche" werden vorliegend sowohl genau eine Oberfläche als auch zwei oder mehrere Oberflächen verstanden. Unter dem Begriff "ein Polyamidoberflächenpolymer (PAO)" wird vorliegend sowohl genau ein PAO als auch Mischungen ans zwei oder mehreren PAO's verstanden.

Die Oberflächenzusammensetzung (OZ) kann dabei lokal an einer vorgegebenen Position die Oberfläche der ersten Kunststoffkomponente (K1) ausbilden. Es ist auch möglich, dass die Oberflächenzusammensetzung (OZ) die Matrixzusammensetzung (MZ) vollständig umschließt. Für den bevorzugten Fall eines flächigen Compositkunststoffteils (CK) kann die Oberflächenzusammensetzung (OZ) eine Oberfläche auf der Oberseite der Matrixzusammensetzung (MZ) und/oder auf der Unterseite der Matrixzusammensetzung (MZ) ausbilden.

Für den Fall dass die Oberflächenzusammensetzung (OZ) nur auf der Oberseite oder nur auf der Unterseite der Matrixzusammensetzung (MZ) eine Oberfläche ausbildet, bildet die Oberflächenzusammensetzung (OZ) 10 % bis 50 % der Gesamtoberfläche der ersten Kunststoffkomponente (K1), bevorzugt 30 bis 50 % und besonders bevorzugt 40 bis 50% der Gesamtoberfläche der ersten Kunststoffkomponente (K1).

Für den Fall dass die Oberflächenzusammensetzung (OZ) auf der Oberseite und der Unterseite der Matrixzusammensetzung (MZ) eine Oberfläche ausbildet, bildet die Oberflächenzusammensetzung (OZ) größer 50 % bis 100 % der Gesamtoberfläche der ersten Kunststoffkomponente (K1), bevorzugt 80 bis 100 % und besonders bevorzugt 90 bis 100% der Gesamtoberfläche der ersten Kunststoffkomponente (K1).

Als Polyamidoberflächenpolymer (PAO) können Polyamide eingesetzt werden, wie sie vorstehend zum Polyamidmatrixpolymer (PAM) beschrieben wurden. Für das Polyamidoberflächenpolymer (PAO) gelten die vorstehenden Ausführungen und Bevorzugungen zum Polyamidmatrixpolymer (PAM) somit entsprechend.

Das Polyamidoberflächenpolymer (PAO) enthält im Allgemeinen kein Fasermaterial (F1). Das Polyamidoberflächenpolymer (PAO) kann gegebenenfalls weitere Additive enthalten, wie sie vorstehend zum Polyamidmatrixpolymer (PAM) beschrieben wurden. In einer bevorzugten Ausführungsform enthält die Oberflächenzusammensetzung (OZ) kein Fasermaterial (F1).

In einer bevorzugten Ausführungsform enthält die Oberflächenzusammensetzung (OZ) als Polyamidoberflächenpolymer (PAO) das gleiche Polyamidpolymer wie das Polyamidmatrixpolymer (PAM). In einer bevorzugten Ausführungsform sind somit Polyamidmatrixpolymer (PAM) und das Polyamidoberflächenpolymer (PAO) identisch.

Es ist jedoch auch möglich, als Polyamidoberflächenpolymer (PAO) ein Polyamidpolymer einzusetzen, das vom Polyamidmatrixpolymer (PAM) verschieden ist.

Herstellung des Compositkunststoffteils (CK); erste Kunststoffkomponente (K1)

Für den Fall, das als erstes Fasermaterial (F1) ein Endlosfasermaterial in Form einer Matte, eines Flieses, eines Filzes, eines Gewebes, eines Gestrickes oder eines Gewirkes eingesetzt wird, wird zur Herstellung der ersten Kunststoffkomponente (K1) das erste Fasermaterial (F1) im Allgemeinen mit dem Polyamidmatrixpolymer (PAM) imprägniert. Zur Herstellung wird das Polyamidmatrixpolymer (PAM) beispielsweise in Form einer Schmelze mit dem ersten Fasermaterial (F1) in Kontakt gebracht. Eine weitere Möglichkeit zur Herstellung der ersten Kunststoffkomponente (K1) ist die Pulverpreimprägnierung oder das Laminieren des ersten Fasermaterials (F1) mit Folien des Polyamidmatrixpolymers (PAM) und anschließendem Schmelzen und Verpressen der Folie/n beziehungsweise des aufgetragenen Pulvers, um die erste Kunststoffkomponente (K1) herzustellen.

Es ist auch möglich, einzelne Endlosfasern oder Garne aus Endlosfasern mit dem Polyamidmatrixpolymer (PAM) zu ummanteln, nachfolgend die ummantelten Endlosfasern zu verweben und nachfolgend das Gewebe zu erhitzen, um das Polyamidmatrixpolymer (PAM) zu verschmelzen und die ersten Kunststoffkomponente (K1) zu erhalten.

Die unterschiedlichen Verfahren zur Herstellung der ersten Kunststoffkomponente (K1) sind dem Fachmann prinzipiell bekannt und beispielsweise in R. Stolze, Kunststoffe 78, 1988, Seiten 126 bis 131 sowie in M. Wacker, G.W. Ehrenstein, C. Obermann, Kunststoffe 92, 2002, Seiten 78 bis 81, beschrieben.

In einer Ausführungsform weist die Kunststoffkomponente (K1) einen schichtartigen Aufbau auf. Dieser Aufbau wird auch als Sandwichstruktur bezeichnet. Für den Fall einer Sandwichstruktur weist die Kunststoffkomponente (K1) eine Vielzahl von Schichten des ersten Fasermaterials (F1) auf. Unter Vielzahl werden vorliegend im Allgemeinen 2 bis 20 Schichten des ersten Fasermaterials (F1) verstanden. In der Sandwichstruktur befindet sich formal zwischen jeweils zwei benachbarten Schichten des ersten Fasermaterials (F1) mindestens eine Polymerschicht. Diese Polymerschichten können dabei aus dem Polyamidmatrixpolymer (PAM) oder aus dem Polyamidoberflächenpolymer (PAO) gebildet sein. Für diese Ausführungsform gelten die allgemeinen Ausführungen und Bevorzugungen in Bezug auf K1, F1, PAM und PAO entsprechend. Für den Fall einer Sandwichstruktur kann diese 1 bis 20, bevorzugt 2 bis 10 und besonders bevorzugt 2 bis 6 Schichten des ersten Fasermaterials (F1) enthalten.

Die Herstellung einer solchen Sandwichstruktur ist dem Fachmann an sich bekannt und kann beispielsweise durch Laminieren erfolgen. Die Herstellung wird nachfolgend am Beispiel einer Sandwichstruktur beschrieben, die zwei Schichten des ersten Fasermaterials (F1) aufweist. Hierzu werden die Materialien in der nachfolgenden angegebenen Reihenfolge aufeinander gebracht und anschließend, bevorzugt unter Druck und Erwärmen, zusammengefügt:

Eine Folie aus PAO, eine Schicht aus F1, eine Folie aus PAM, eine Schicht aus F1 und eine Folie aus PAO.

Das Zusammenfügen kann beispielsweise unter Erwärmen und Druck erfolgen. Hierzu können die vorstehend genannten Materialien beispielsweise einer beheizbaren Rollpresse zugeführt werden, in der das Zusammenfügen erfolgt.

Durch das Erwärmen beim Zusammenfügen schmilzt das als mittlere Schicht eingesetzte Polyamidmatrixpolymer (PAM). Hierdurch werden die benachbarten Schichten aus dem ersten Fasermaterial (F1) durch das Polyamidmatrixpolymer (PAM) imprägniert. Durch das vorstehend beschriebene exemplarische Verfahren wird als Kunststoffkomponente (K1) eine Sandwichstruktur erhalten, die den folgenden Schichtaufbau aufweist:

PAO, F1, PAM, F1 und PAO.

Beim Erwärmen und Verpressen bildet sich aus der Polyamidmatrixpolymer-(PAM)-Folie und den beiden Schichten aus dem ersten Fasermaterial (F1) die Matrixzusammensetzung (MZ).

Die als erste Kunststoffkomponente (K1) erhaltene Sandwichstruktur weist somit formal den folgenden Schichtaufbau auf: PAO, F1, PAM, F1 und PAO. Aus F1, PAM und F1 bildet sich hierbei formal die Matrixzusammensetzung (MZ). Die Matrixzusammensetzung besteht somit aus an beide Seiten imprägniertem Fasermaterial (F1) mit dem Polyamidmatrixpolymer (PAM) dazwischen. In Abhängigkeit des Grads der Erwärmung und des aufgewendeten Drucks können sich die beiden Matten aus erstem Fasermaterial (F1) in der ersten Kunststoffkomponente (K1) berühren.

Das Polyethylenimin (PEI) wird im Allgemeinen dem Polyamidmatrixpolymer (PAM) und/oder dem Polyamidoberflächenpolymer (PAO) zugesetzt. Hierzu werden übliche Mischvorrichtungen, wie beispielsweise Extruder, eingesetzt. Es ist auch möglich, das Polyethylenimin (PEI) dem Polyamidmatrixpolymer (PAM) und/oder dem Polyamidoberflächenpolymer (PAO) erst bei der Herstellung der Kunststoffkomponente (K1) zuzugeben. Bevorzugt wird das Polyethylenimin (PEI) nur dem Polyamidoberflächenpolymer (PAO) zugegeben.

Für den Fall, dass das Compositkunststoffteil (CK) Eisenpulver (CIP) enthält, wird das Eisenpulver (CIP) im Allgemeinen dem Polyamidmatrixpolymer (PAM) und/oder dem Polyamidoberflächenpolymer (PAO) zugesetzt. Hierzu werden übliche Mischvorrichtungen, wie beispielsweise Extruder, eingesetzt. Es ist auch möglich, das Eisenpulver (CIP) dem Polyamidmatrixpolymer (PAM) und/oder dem Polyamidoberflächenpolymer (PAO) erst bei der Herstellung der Kunststoffkomponente (K1) zuzugeben. Bevorzugt wird das Eisenpulver (CIP) nur der Polyamidoberflächenpolymer (PAO) zugegeben.

Für den Fall, dass weitere Additive eingesetzt werden, werden diese im Allgemeinen ebenfalls durch übliche Mischvorrichtungen in dem jeweiligen Polyamidpolymer verteilt.

Im Compositkunststoffteil (CK) sind im Allgemeinen 0,01 bis 5 Gew.-% eines Polyethylenimins (PEI) enthalten, bezogen auf das Gesamtgewicht des Compositkunststoffteils (CK). Bevorzugt enthält das Compositkunststoffteil (CK) 0,1 bis 1 Gew.-% Polyethylenimin (PEI), bezogen auf das Gesamtgewicht des Compositkunststoffteils (CK).

Gegenstand der vorliegenden Erfindung ist auch ein Compositkunststoffteil (CK), bei dem das Compositkunststoffteil (CK) 0,01 bis 5 Gew.-% Polyethylenimin (PEI) enthält, bezogen auf das Gesamtgewicht des Compositkunststoffteils (CK).

Unter Polyethyleniminen (PEI) im Sinne der vorliegenden Erfindung werden sowohl Homo- als auch Copolymerisate verstanden, welche beispielsweise nach den Verfahren in Ullmann (Electronic Release) unter dem Stichwort "Aziridine" oder gemäß WO-A 94/12560 erhältlich sind.

Die Homopolymerisate sind im Allgemeinen durch Polymerisation von Ethylenimin (Aziridin) in wässriger oder organischer Lösung in Gegenwart von säureabspaltenden Verbindungen Säuren oder Lewis-Säuren erhältlich. Derartige Homopolymerisate sind verzweigte Polymere, die in der Regel primäre, sekundäre und tertiäre Aminogruppen im Verhältnis von ca. 30 % zu 40 % zu 30 % enthalten. Die Verteilung der Aminogruppen kann im Allgemeinen mittels $^{13}$C-NMR Spektroskopie bestimmt werden. Diese beträgt vorzugsweise 1:0, 8:0,5 bis 1:1, 3:8, insbesondere 1:1, 1:0,8 bis 1:1.

Gegenstand der vorliegenden Erfindung ist auch ein Compositkunststoffteil (CK), bei dem das Polyethylenimin (PEI) primäre, sekundäre und tertiäre Aminogruppen enthält, wobei das Verhältnis von primären zu sekundären zu tertiären Aminogruppen im Bereich von 1 : 0,8 : 0,5 bis 1 : 1,3 : 0,8 liegt.

Als Comonomere werden vorzugsweise Verbindungen eingesetzt, welche mindestens zwei Aminofunktionen aufweisen. Als geeignete Comonomere seien beispielsweise Alkylendiamine mit 2 bis 10 C-Atomen im Alkylenrest genannt, wobei Ethylendiamin und Propylendiamin bevorzugt sind. Weiterhin geeignete Comonomere sind Diethylentriamin, Triethylentetramin, Tetraethylenpentamin, Dipropylentriamin, Tripropylentriamin, Diehexamethylentriamin, Aminopropylethylendiamin und Bisaminopropylethylendiamin.

Polyethylenimin (PEI) weisen üblicherweise ein gewichtsmittleres Molekulargewicht (Gewichtmittel) $M_w$ von 600 bis 3 000 000, vorzugsweise 700 bis 2 000 000 auf. Das bevorzugte $M_w$ beträgt 800 bis 50 000, insbesondere von 1 100 bis 25 000. Das gewichtsmittlere Molekulargewicht $M_w$ wird bestimmt mittels Lichtstreuung gemäß gemäß ASTM D4001.

Gegenstand der vorliegenden Erfindung ist somit auch ein Compositkunststoffteil (CK), bei dem das Polyethylenimin (PEI) ein gewichtsmittleres Molekulargewicht $M_w$ im Bereich von 600 bis 300 000 g/mol hat.

Darüber hinaus eignen sich vernetzte Polyethylenimine (PEI), die durch Reaktion von Polyethyleniminen (PEI) mit bi- oder polyfunktionellen Vernetzern erhältlich sind, welche als funktionelle Gruppe mindestens eine Halogenhydrin-, Glycidyl-, Aziridin-, Isocyanateinheit oder ein Halogenatom aufweisen. Als Beispiel seien Epichlorhydrin oder Bichlorhydrinether von Polyalkylenglykolen mit 2 bis 100 Ethylenoxid- und/oder Propylenoxid-Einheiten sowie die in der DE-A 19 93 17 20 und US 4 144 123 aufgeführten Verbindungen genannt. Verfahren zur Herstellung von vernetzten Polyethyleniminen (PEI) sind unter anderem aus den oben genannten Schriften sowie EP-A 895 521 und EP-A 25 515 bekannt.

Weiterhin sind gepfropfte Polyethylenimine (PEI) geeignet, wobei als Pfropfmittel sämtliche Verbindungen eingesetzt werden können, die mit den Aminobeziehungsweise Iminogruppen der Polyethylenimine (PEI) reagieren können. Geeignete Pfropfmittel und Verfahren zur Herstellung von gepfropften Polyethylenimine (PEI) sind beispielsweise der EP-A 675 914 zu entnehmen.

Ebenso geeignete Polyethylenimine (PEI) im Sinne der Erfindung sind amidierte Polymerisate, die üblicherweise durch Umsetzung von Polyethyleniminen (PEI) mit Carbonsäuren, deren Ester oder Anhydride, Carbonsäureamide oder Carbonsäurehalogenide erhältlich sind. Je nach Anteil der amidierten Stickstoffatome in der Polyethyleniminkette können die amidierten Polymerisate nachträglich mit den genannten Vernetzern vernetzt werden. Vorzugsweise werden hierbei bis zu 30 % der Aminofunktionen amidiert, damit für eine anschließende Vernetzungsreaktion noch genügend primäre und/oder sekundäre Stickstoffatome zur Verfügung stehen.

Außerdem eignen sich alkoxylierte Polyethylenimine (PEI), die beispielsweise durch Umsetzung von Polyethylenimin (PEI) mit Ethylenoxid und/oder Propylenoxid erhältlich sind. Auch derartige alkoxylierte Polymerisate sind anschließend vernetzbar.

Als weitere geeignete erfindungsgemäße Polyethylenimine (PEI) seien hydroxylgruppenhaltige Polyethylenimine (PEI) und amphotere Polyethylenimine (PEI) (Einbau von anionischen Gruppen) genannt sowie lipophile Polyethylenimine (PEI), die in der Regel durch Einbau langkettiger Kohlenwasserstoffreste in die Polymerkette erhalten werden. Verfahren zur Herstellung derartiger Polyethylenimine (PEI) sind dem Fachmann bekannt.

Als Polyethylenimine (PEI) sind hyperverzweigte Polyethylenimine (PEI) bevorzugt. Das Merkmal "hyperverzweigt" bedeutet im Rahmen der vorliegenden Erfindung, dass der Verzweigungsgrad (DB) (degree of branching) des Polyethylenimins (PEI) im Bereich von 10 bis 99 %, bevorzugt im Bereich von 50 bis 99 % und besonders bevorzugt im Bereich von 60 bis 99 % liegt. DB ist dabei definiert als

$$DB\ (\%) = 100 \times (T+Z)/(T+Z+L),$$

wobei T die mittlere Anzahl der terminalgebundenen Monomereinheiten, Z die mittlere Anzahl der Verzweigungen bildenden Monomereinheiten und L die mittlere Anzahl der lineargebundenen Monomereinheiten in dem Polyethylenimin (PEI) bedeuten.

Gegenstand der vorliegenden Erfindung ist somit auch ein Compositkunststoffteil (CK), das dadurch gekennzeichnet ist, dass das Polyethylenimin (PEI) ein hyperverzweigtes Polymer mit einem Verzweigungsgrad DB im Bereich von 10 bis 99 % ist, wobei DB definiert ist als $DB\ (\%) = 100 \times (T + Z) / (T + Z + L)$, wobei T die mittlere Anzahl der terminal gebundenen Monomereinheiten, Z die mittlere Anzahl der Verzweigungen bildenden Monomereinheiten und L die mittlere Anzahl der linear gebundenen Monomereinheiten in dem Polyethylenimin (PEI) bedeuten.

Für den Fall, dass das Compositkunststoffteil (CK) Eisenpulver (CIP) enthält, ist dieses im Allgemeinen in Mengen im Bereich von 0,01 bis 20 Gew.-%, bevorzugt im Bereich von 0,05 bis 10 Gew.-% und insbesondere im Bereich von 0,1 bis 5 Gew.-% im Compositkunststoffteil (CK) enthalten, jeweils bezogen auf das Gesamtgewicht des Compositkunststoffteils (CK).

Als Eisenpulver (CIP) ist beispielsweise Eisenpulver geeignet, wie es in der WO 2010/076145 oder WO 2001/051123 beschrieben ist.

Eisen kommt in mehreren allotropen Modifikationen vor:

1. $\alpha$-Fe (Ferrit) bildet raumzentrierte Würfelgitter, ist magnetisierbar, löst wenig Kohlenstoff, kommt in reinem Eisen bis 928°C vor. Bei 770°C (Curie-Temperatur) verliert es seine ferromagnetischen Eigenschaften und wird paramagnetisch; Eisen im Temperaturbereich von 770 bis 928°C wird auch als $\beta$-Fe bezeichnet. Bei gewöhnlicher Temperatur und einem Druck von mindestens 13000 MPa geht $\alpha$-Fe in sog. $\varepsilon$-Fe unter einer Vol.-Verminderung von ca. 0,20 cm$^3$/mol über, wobei sich die dichte von 7,85 auf 9,1 (bei 20000 MPa) erhöht.

2. $\gamma$-Fe (vgl. Austenit) bildet flächenzentrierte Würfelgitter, ist unmagnetisch, löst viel Kohlenstoff und ist nur im Temperaturbereich von 928 bis 1398°C zu beobachten.

3. $\delta$-Fe, raumzentriert, existiert zwischen 1398°C und dem Schmelzpunkt 1539°C.

Metallisches Eisen ist allgemein silberweiß, Dichte 7,874 (Schwermetall), Schmelzpunkt 1539°C, Siedepunkt 2880°C; spezif. Wärme (zwischen 18 und 100°C) etwa 0,5 g$^{-1}$ K, Zugfestigkeit 220 bis 280 N/mm$^2$. Die Werte gelten für das chemisch reine Eisen.

Eisen wird durch Reduktion von Eisenoxid mit Wasserstoff bei niedriger Temperatur als chemisch reines Pulver, durch thermische Zersetzung von Eisenpentacarbonyl gemäß $Fe(CO)_5 \rightarrow Fe + 5CO$ bei 150 bis 250°C als sehr reines Pulver - Carbonyleisen - oder durch Elektrolyse von Eisen(II)-chlorid-Lösung oder Eisen(II)-sulfat-Lösung mit unlöslichem Graphit oder löslicher Anode aus Eisenblech oder Gusseisen erhalten. Durch Abscheidung aus schwefelsaurer Eisen(II)-sulfat-Lösung an Quecksilber-Kathoden und anschließende Raffination lässt sich 99,99 %iges Eisen gewinnen. Großtechnisch wird Eisen durch Verhüttung von Eisenerzen, Eisenschlacken, Kiesabbränden, Gichtstaub und durch Umschmelzen von Schrott und Legierungen hergestellt.

Bevorzugtes Eisenpulver (CIP) weist eine mittlere Teilchengröße $d_{50}$ von maximal 450 μm, insbesondere 20 bis 250, ganz besonders bevorzugt von 30 bis 100 μm auf (gemäß ASTM D 1921-89, Methode A).

Derartige Produkte sind z.B. als SCM IronPowder A 131 von SCM Metal Products erhältlich.

Bevorzugt wird das erfindungsgemäße Eisenpulver (CIP) durch thermische Zersetzung von Eisenpentacarbonyl hergestellt, vorzugsweise bei Temperaturen von 150°C bis 350°C. Die hierbei erhältlichen Partikel (Teilchen) haben eine vorzugsweise sphärische Form, d.h. kugelförmig oder nahezu kugelförmige Form (auch als sphärolitisch bezeichnet).

Bevorzugtes Eisenpulver (CIP) weist eine Teilchengrößenverteilung (Partikelgrößenverteilung) wie nachstehend beschrieben auf, wobei die Teilchengrößenverteilung mittels Laserbeugung in einer hoch verdünnten wässrigen Suspension (z.B. mit Beckmann LS13320 Gerät) bestimmt wird. Optional kann die nachfolgend beschriebene Teilchengröße (und Verteilung) durch Mahlen oder/und Sieben eingestellt werden.

$d_{50}$-Werte: max. 10 μm, vorzugsweise 1,6 bis 8 μm, insbesondere 2,9 bis 7,5 μm, ganz besonders 3,4 bis 5,2 μm

$d_{10}$-Werte: vorzugsweise 1 bis 5 μm, insbesondere 1 bis 3 μm und ganz besonders 1,4 bis 2,7 μm

$d_{90}$-Werte: vorzugsweise 3 bis 35 μm, insbesondere 3 bis 12 μm

Bevorzugt weist das Eisenpulver (CIP) einen Eisengehalt von 97 bis 99,8 g/100 g, vorzugsweise von 97,5 bis 99,6 g/100 g Eisenpulver (CIP) auf. Der Gehalt an weiteren Metallen beträgt vorzugsweise unter 1000 ppm, insbesondere unter 100 ppm und ganz besonders unter 10 ppm.

Der Fe-Gehalt wird üblicherweise durch Infrarotspektroskopie bestimmt.

Der C-Gehalt beträgt vorzugsweise 0,01 bis 1,2 g/100 g, vorzugsweise 0,05 bis 1,1 g/100 g und insbesondere 0,4 bis 1,1 g/100 g. Dieser C-Gehalt entspricht bei den bevorzugten Eisenpulvern solchen, die im Anschluss an die thermische Zersetzung nicht mit Wasserstoff reduziert werden. Der C-Gehalt wird üblicherweise durch Verbrennen der Probenmenge im Sauerstoffstrom und anschließender IR-Detektion des entstandenen $CO_2$-Gases (mittels Leco CS230 oder CS-mat 6205 der Firma Juwe) in Anlehnung an ASTM E1019 bestimmt.

Der Stickstoffgehalt beträgt vorzugsweise max. 1,5 g/100 g, bevorzugt von 0,01 bis 1,2 g/100 g. Der Sauerstoffgehalt beträgt vorzugsweise max. 1,3 g/100 g, bevorzugt 0,3 bis 0,65 g/100 g. Die Bestimmung von N und O erfolgt durch Erhitzen der Probe im Graphitofen auf ca. 2100°C. Der hierbei in der Probe erhaltene Sauerstoff wird zu CO umgesetzt und über einen IR-Detektor gemessen. Der unter den Reaktionsbedingungen freigesetzte N aus den N-haltigen Verbindungen wird mit dem Trägergas ausgetragen und mittels WLD (Thermal Conductivity Detector/TC) detektiert und erfasst (beide Methoden in Anlehnung an ASTM E1019).

Die Klopfdichte (tap density) des Eisenpulvers (CIP) beträgt vorzugsweise 2,5 bis 5 g/cm$^3$, insbesondere 2,7 bis 4,4 g/cm$^3$. Darunter wird im Allgemeinen die Dichte verstanden, wenn das Pulver in den Container z.B. gefüllt und geschüttelt wird, um eine Kompaktierung zu erzielen.

Weiterhin bevorzugte Eisenpulver können mit Eisenphosphat, Eisenphosphit oder $SiO_2$ oberflächlich beschichtet sein.

Die BET-Oberfläche des Eisenpulvers (CIP) gemäß DIN ISO 9277 beträgt vorzugsweise von 0,1 bis 10 m$^2$/g, insbesondere 0,1 bis 5 m$^2$/g, bevorzugt 0,2 bis 1 m$^2$/g und insbesondere 0,4 bis 1 m$^2$/g.

**Zweite Kunststoffkomponente (K2)**

Gegenstand der vorliegenden Erfindung ist auch ein Compositkunststoffteil (CK), bei dem das Compositkunststoffteil (CK) zusätzlich

ii) eine zweite Kunststoffkomponente (K2), die ein Polyamidanformungspolymer (PAA) enthält und an die Oberfläche von K1 angeformt ist,

enthält

Die zweite Kunststoffkomponente (K2) enthält ein Polyamidanformungspolymer (PAA). Unter dem Begriff "ein Polyamidanformungspolymer (PAA)" wird vorliegend sowohl genau ein PAA als auch Mischungen ans zwei oder mehreren PAA verstanden. Als ein Polyamidanformungspolymer (PAA) können im Allgemeinen die Polyamide eingesetzt werden, die auch als Polyamidmatrixpolymer (PAM) eingesetzt werden können. Für das Polyamidanformungspolymer (PAA) gelten somit die Ausführungen zum Polyamidmatrixpolymer (PAM) und die dort genannten Bevorzugungen entsprechend.

Als Polyamidanformungspolymer (PAA) kann das gleiche Polyamid wie für das Polyamidmatrixpolymer (PAM) verwendet werden. Es ist auch möglich für das Polyamidanformungspolymer (PAA) ein vom Polyamidmatrixpolymer (PAM) verschiedenes Polyamid einzusetzen.

Auch das Polyamidanformungspolymer (PAA) kann weitere übliche Additive enthalten wie vorstehend bei PAO und PAM beschrieben.

Das Polyamidanformungspolymer (PAA) kann ebenfalls ein Polyethylenimin (PEI) enthalten. Bevorzugt enthalten sowohl OZ als auch K2 ein Polyethylenimin (PEI).

Gegenstand der vorliegenden Erfindung ist somit auch ein Compositkunststoffteil (CK), bei dem OZ und K2 Polyethylenimin (PEI) enthalten.

K2 kann das gleiche Polyethylenimin (PEI) wie die OZ enthalten. Es ist auch möglich, dass K2 ein von OZ verschiedenes Polyethylenimin (PEI) enthält. Für K2 gelten die Ausführungen und Bevorzugungen für das Polyethylenimin (PEI) wie sie vorstehend zur Oberflächenzusammensetzung (OZ) gemacht wurden entsprechend. K2 kann darüber hinaus auch Eisenpulver (CIP) enthalten. Für K2 gelten die vorstehend gemachten Ausführungen und Bevorzugungen für das Eisenpulver (CIP) entsprechend.

Gegenstand der vorliegenden Erfindung ist somit auch ein Compositkunststoffteil (CK), bei dem OZ und/oder K2 Eisenpulver (CIP) enthalten.

Das Polyethylenimin (PEI) wird bevorzugt ebenfalls in das Polyamidanformungspolymer (PAA) eingemischt. Für den Fall, dass Eisenpulver (CIP) eingesetzt wird, wird dieses bevorzugt ebenfalls in das Polyamidanformungspolymer (PAA) eingemischt. Hierfür können bekannte Mischvorrichtungen, wie beispielsweise Extruder, eingesetzt werden. Bevorzugt enthält die zweite Kunststoffkomponente (K2) ebenfalls ein Fasermaterial zur Verstärkung.

Als geeignete Materialien für dieses zweite Fasermaterial (F2) seien nur beispielhaft Kohlenstofffasern, Glasfasern, Aramidfasern, Kaliumtitanatfasern, Borfasern, mineralische Fasern (wie beispielsweise Basaltfasern) und metallische Fasern (wie beispielsweise Stahl- oder Kupferfasern) genannt.

Endlosfasern sind als zweites Fasermaterial (F2) nicht geeignet. Als zweites Fasermaterial (F2) sind Glasfasern (Kurzglasfasern) bevorzugt. Diese Glasfasern können beispielsweise mit einem Extruder in eine Polyamidschmelze eingemischt werden.

Gegenstand der vorliegenden Erfindung ist somit auch ein Compositkunststoffteil (CK), bei dem K2 ein zweites Fasermaterial (F2) enthält, wobei das zweite Fasermaterial (F2) ein Kurzfasermaterial ist.

Als zweites Fasermaterial (F2) werden bevorzugt Fasern eingesetzt, die sich mittels geeigneter Mischvorrichtungen in das Polyamidanformungspolymer (PAA) einmischen lassen. Die zweite Kunststoffkomponente (K2) kann gegebenenfalls noch weitere Additive enthalten. Als weitere Additive können dabei die vorstehend zu MZ beziehungsweise OZ genannten Additive eingesetzt werden.

Anformen der zweiten Kunststoffkomponente (K2)

Die erste Kunststoffkomponente (K1) wird im Allgemeinen in ein Formwerkzeug eingelegt. Hierbei ist es zum Beispiel möglich, die erste Kunststoffkomponente (K1) in einem vorgelagerten Schritt in einem ersten Werkzeug vorzuformen und den so hergestellten Vorformling nachfolgend in das Formwerkzeug einzulegen. Dies ist insbesondere dann möglich, wenn es sich bei der ersten Kunststoffkomponente (K1) um ein flächiges Kunststoffelement handelt.

Alternativ ist es auch möglich, die erste Kunststoffkomponente (K1) direkt in dem Formwerkzeug umzuformen. Bevorzugt ist es jedoch, die erste Kunststoffkomponente (K1) in einem ersten Werkzeug vorzuformen und den Vorformling nachfolgend in das Formwerkzeug einzulegen.

Weiterhin ist es möglich, die erste Kunststoffkomponente (K1) vor dem Einlegen in das Formwerkzeug zu erwärmen oder alternativ die erste Kunststoffkomponente (K1) in dem Formwerkzeug zu erwärmen. Insbesondere ist es bevorzugt die erste Kunststoffkomponente (K1) vorzuwärmen und die vorgewärmte erste Kunststoffkomponente (K1) in das Formwerkzeug einzulegen.

Bevorzugt weist das Formwerkzeug eine Temperatur im Bereich von 40 bis 210 °C, insbesondere im Bereich von 80 bis 120 °C, auf. Die erste Kunststoffkomponente (K1) wird vorzugsweise vor dem Einlegen in das Formwerkzeug auf eine Temperatur von 30 bis 190 °C, insbesondere im Bereich von 120 bis 170 °C erwärmt.

Nach dem Einlegen der ersten Kunststoffkomponente (K1) wird die zweite Kunststoffkomponente (K2) in das Formwerkzeug eingebracht. Hierbei wird die zweite Kunststoffkomponente (K2) an die Oberfläche der erste Kunststoffkomponente (K1) angeformt. Dieses Anformen wird auch als "overmolding" bezeichnet. Im Rahmen der vorliegenden Erfindung wird unter "Anformen" das partielle Anformen der zweiten Kunststoffkomponente (K2) an Teile der erste Kunststoffkomponente (K1) verstanden. Darüber hinaus wird unter "Anformen" auch das vollständige oder teilweise Umschließen der ersten Kunststoffkomponente (K1) durch die zweite Kunststoffkomponente (K2) verstanden.

Beim Anformen kann die zweite Kunststoffkomponente (K2) entweder lokal an vorgegeben Positionen an die erste Kunststoffkomponente (K1) angeformt werden. Darüber hinaus ist es auch möglich, die erste Kunststoffkomponente (K1) vollständig oder teilweise mit der zweiten Kunststoffkomponente (K2) zu umschließen.

Beim Anformen ist es darüber hinaus möglich, zusätzliche Funktionselemente aus der zweiten Kunststoffkomponente (K2) auszubilden, die an der Oberfläche der erste Kunststoffkomponente (K1) angeformt sind.

Zum Anformen wird die zweite Kunststoffkomponente (K2), nach dem Fachmann bekannten Methoden, üblicherweise aufgeschmolzen und in das Formwerkzeug eingespritzt. Durch die Verwendung des vorstehend beschriebenen Polyethylenimins (PEI), gegebenenfalls in Kombination mit Eisenpulver (CIP), wird eine verbesserte Wärmealterungsstabilität (WAB) des Compositkunststoffteils (CK) erreicht. Darüber hinaus wird eine verbesserte Adhäsion zwischen der erste Kunststoffkomponente (K1) und der zweiten Kunststoffkomponente (K2) im Compositkunststoffteil (CK) erzielt.

Gegenstand der vorliegenden Erfindung ist somit auch ein Verfahren zur Herstellung eines Compositkunststoffteils (CK), bei dem in Schritt a) K1 in ein Formwerkzeug eingelegt wird und in Schritt b) K2 in geschmolzenem Zustand in das Formwerkzeug eingespritzt wird.

Das so hergestellte Compositkunststoffteil (CK) kann nachfolgend weiteren Bearbeitungsschritten unterzogen werden. Hierunter fallen beispielsweise weitere Umformungsschritte sowie Oberflächenbehandlungen des Compositkunststoffteils (CK), um dessen Oberfläche zu veredeln.

Um eine gute Verbindung zwischen der ersten Kunststoffkomponente (K1) und der zweiten Kunststoffkomponente (K2) zu erzielen, ist es vorteilhaft, wenn die Temperatur an der Oberfläche der erste Kunststoffkomponente (K1) oberhalb der Schmelztemperatur des Polyamidoberflächenpolymers (PAO) liegt. Hierzu wird die erste Kunststoffkomponente (K1) in der Regel erwärmt. Die Erwärmung der ersten Kunststoffkomponente (K1) kann wie vorstehend ausgeführt, direkt im Formwerkzeug erfolgen. Alternativ kann die erste Kunststoffkomponente (K1) auch außerhalb des Formwerkzeugs erwärmt werden. Der Druck, mit dem die zweite Kunststoffkomponente (K2) in das Formwerkzeug eingebracht wird, ist von der Fließrichtung der Schmelze der zweiten Kunststoffkomponente (K2) abhängig. Hierzu werden dem Fachmann an sich bekannte Verfahren zum Spritzgießen sowie Fließpressen eingesetzt und die dort üblichen Drücke eingehalten.

Die vorliegende Erfindung wird durch die nachfolgenden Beispiele näher erläutert, ohne sie jedoch hierauf zu beschränken.

*Beispiele*

1. Herstellung der ersten Kunststoffkomponente (K1)

Zur Herstellung der ersten Kunststoffkomponente (K1) werden Polyamide (PA6) mit relativen Viskositäten (RV) von 2,1 bis 2,7 bzw. Polyamid (PA66) mit einer relativen Viskosität (RV) von 2,7 eingesetzt. In diese Polyamide wird mittels eines Extruders Lupasol WF der BASF SE bzw. Eisenpulver (CIP) eincompoundiert. Lupasol WF ist eine Polyethylenimin mit der CAS-Nr.: 9002-98-6 mit einer molaren Masse von ca. 25 000 g/mol. Die eingesetzten Mengen an Lupasol WF sind in den nachfolgenden Tabellen angegeben. Die relative Viskosität wurde gemessen nach ISO307. Das Eisenpulver (CIP) wurde als Batch zugegeben.

Die Lupasol WF-Mengen und die Eisenpulver (CIP)-Mengen sind in Gewichtsprozent, bezogen auf das Gesamtgewicht des eingesetzten Polyamids der Matrixzusammensetzung (MZ) beziehungsweise der Oberflächenzusammensetzung (OZ), jeweils ohne Fasermaterial, angegeben.

Nach Herstellung des Polyamidmatrixpolymers (PAM), das die angegebenen Lupasol WF-Mengen und gegebenenfalls Eisenpulver (CIP)-Mengen enthält, wurde das erhaltene Polyamidmatrixpolymer (PAM) durch Mahlen zu einem feinen Pulver zerkleinert. Dieses Pulver wurde nachfolgend auf eine gewobene Endlosfasermatte (erstes Fasermaterial (F1)) aufgebracht und aufgeschmolzen. Nach Herstellung des Polyamidoberflächenpolymer (PAO), das die angegebenen Lupasol WF-Mengen und gegebenenfalls Eisenpulver (CIP)-Mengen enthält, wurde das erhaltene Polyamidoberflächenpolymer (PAO) durch Mahlen zu einem feinen Pulver zerkleinert. Auf die gewobene Endlosfasermatte, auf die das Polyamidmatrixpolymer (PAM) aufgeschmolzen worden ist, wurde eine weitere gewobene Endlosfasermatte (erstes Fasermaterial (F1)) aufgebracht. Das Pulver des Polyamidoberflächenpolymers (PAO) wurde nachfolgend auf die weitere gewobene Endlosfasermatte aufgebracht und aufgeschmolzen. Nachfolgend wurden die gewobenen Endlosfasermatten unter Druck und einer Temperatur, die oberhalb der Schmelztemperatur des Polyamidmatrixpolymers (PAM) und des Polyamidoberflächenpolymers (PAO) lag, behandelt, um die erste Kunststoffkomponente (K1) herzustellen.

Die Zusammensetzung der Matrixzusammensetzung (MZ) und der Oberflächenzusammensetzung (OZ) des ersten Kunststoffteils sind in der nachfolgenden Tabellen 1, 2 und 4 angegeben.

Auf das so erhaltene erste Kunststoffkomponente (K1) wurde nachfolgend eine zweite Kunststoffkomponente (K2) angeformt. Hierzu wurde als Polyamidanformungspolymer (PAA) ein Polyamid (PA6) eingesetzt.

Der zweiten Kunststoffkomponente (K2) wurde über einen Extruder Lupasol WF zugegeben. Die eingesetzten Lupasol WF-Mengen und gegebenenfalls Eisenpulver (CIP)-Mengen sind in den Tabellen 3 und 5 angegeben. Die dort gezeigten Gewichtsangaben bezeichnen die Gewichtsprozente, bezogen auf das Gesamtgewicht des eingesetzten Polyamidanformungspolymers (PAA).

Zum Anformen der zweiten Kunststoffkomponente (K2) an die ersten Kunststoffkomponente (K1) wurde die erste Kunststoffkomponente (K1) in ein Formwerkzeug eingelegt und erwärmt. Die zweite Kunststoffkomponente (K2) wurde nachfolgend aufgeschmolzen und in das Formwerkzeug eingespritzt.

Als Kunststoffkomponente (K1) wurde ein Probenkörper eingesetzt, der eine Oberfläche von 4 mal 5 cm aufwies. Auf diese Oberfläche wurde eine Kunststoffkomponente (K2) angeformt, die 4 cm lang und 0,4 cm breit war. Die Anhaftungsoberfläche zwischen K1 und K2 betrug somit 4 mal 0,4 cm.

Die Zusammensetzungen der zweiten Kunststoffkomponente (K2) sind in den Tabellen 3 und 5 angegeben.

Zur Bestimmung der Wärmealterungsbeständigkeit (WAB) der Compositkunststoffteile (CK/K1) wurde die Beigefestigkeit der Compositkunststoffteile (CK/K1) vor und nach der Lagerung gemessen. Die Biegefestigkeit wurde gemäß DIN EN ISO 14125:2011 gemessen.

Die Temperatur und Dauer der Wärmelagerung ist in den Tabellen angegeben. Die Wärmelagerung wurde in einem Umluftofen durchgeführt.

Von den hergestellten Compositkunststoffteilen (CK/K1+K2) wurde die Adhäsion zwischen den Kunststoffkomponenten durch die Messung der Zugfestigkeit (tensile strength (MPa)) bestimmt. Die Messung der Zugfestigkeit erfolgte durch einen Zugversuch, wobei die Kraft gemessen wurde, die notwendig ist, um die Kunststoffkomponenten (K1) und (K2) des Compositkunststoffteils (CK/K1+K2) voneinander zu trennen. Hierzu wurde die Kraft mit einer Geschwindigkeit von 5mm pro Minute erhöht.

Die Beispiele belegen, dass die Adhäsion zwischen der ersten Kunststoffkomponente (K1) und der zweiten Kunststoffkomponente (K2) durch die Verwendung eines Polyethylenimins (PEI) nach Wärmelagerung deutlich verbessert wird, wenn die Oberflächenzusammensetzung (OZ) der ersten Kunststoffkomponente (K1) und/oder die zweite Kunststoffkomponente (K2) ein Polyethylenimin (PEI) enthält.

Tabelle 1

| Beispiele CK/K1: | 1 | 2 | 3 | 4 | 5 | 6 |
|---|---|---|---|---|---|---|
| | | | | | | |
| OZ: | | | | | | |
| PA6 (Relative Viskosität) | 2,2 | 2,2 | 2,7 | 2,7 | 2,2 | 2,7 |
| Lupasol WF | | 0,5 | | 0,5 | 0,5 | 0,5 |
| | | | | | | |
| MZ: | | | | | | |
| PA6 (Relative Viskosität) | 2,2 | 2,2 | 2,7 | 2,7 | 2,2 | 2,7 |
| Lupasol WF | | 0,5 | | 0,5 | | |
| | | | | | | |
| Wärmealterungstemperatur: | 180°C | 180°C | 180°C | 180°C | 180°C | 180°C |
| | | | | | | |
| Abnahme der Biegefestigkeit nach 1000h: | -20% | -1% | -22% | keine | -1% | keine |
| Abnahme der Biegefestigkeit nach 2000h: | -27% | -12% | -25% | -11% | -11% | -12% |

Tabelle 2

| Beispiele CK/K1: | 7 | 8 | 9 | 10 | 11 | 17 |
|---|---|---|---|---|---|---|
| | | | | | | |

(fortgesetzt)

| Beispiele CK/K1: | 7 | 8 | 9 | 10 | 11 | 17 |
|---|---|---|---|---|---|---|
| OZ: | | | | | | |
| PA6 (Relative Viskosität) | 2,7 | 2,2 | 2,2 | 2,7 | 2,7 | 2,7 |
| Lupasol WF | | 0,5 | 0,5 | 0,5 | 0,5 | 0,5 |
| Eisenpulver (CIP) | | | 1 | 1 | 1 | 1 |
| | | | | | | |
| MZ: | | | | | | |
| PA6 (Relative Viscosität) | 2,7 | 2,2 | 2,2 | 2,7 | 2,7 | 2,7 |
| Lupasol WF | | 0,5 | 0,5 | | 0,5 | |
| Eisenpulver (CIP) | | 1 | | | 1 | 1 |
| | | | | | | |
| Wärmealterungstemperatur: | 200°C | 200°C | 200°C | 200°C | 200°C | 200°C |
| | | | | | | |
| Abnahme der Biegefestigkeit nach 1000h: | -26% | -9% | keine | -2% | keine | -2% |
| Abnahme der Biegefestigkeit nach 2000h: | -70% | -43% | -22% | -23% | -23% | -24% |

Tabelle 3

| Beispiele CK/K1+K2: | 1a) | 2a) | 8a) | 9a) | 11a) | 11b) | 17a) |
|---|---|---|---|---|---|---|---|
| | | | | | | | |
| K1 | 1 | 2 | 8 | 9 | 11 | 11 | 17 |
| | | | | | | | |
| K2 | | | | | | | |
| PA6 (Relative Viskosität) | 2,7 | 2,7 | 2,7 | 2,7 | 2,7 | 2,7 | 2,7 |
| Lupasol WF | | 0,5 | 0,5 | 0,5 | 0,5 | 0,5 | 0,5 |
| Eisenpulver (CIP) | | | 1 | 1 | 1 | | |
| | | | | | | | |
| **Analysis:** | | | | | | | |
| | | | | | | | |
| Wärmealterungstemperatur (1000h): | 200°C | 200°C | 200°C | 200°C | 200°C | 200°C | 200°C |
| | | | | | | | |
| Zugfestigkeit (MPa): | 11 | 11 | 16 | 19 | 20 | 18 | 18 |

Tabelle 4

| Beispiele CK/K1 | 12 | 13 | 14 | 15 | 16 | 18 |
|---|---|---|---|---|---|---|
| | | | | | | |
| OZ: | | | | | | |
| PA66 (Relative Viskosität) | 2,7 | 2,7 | 2,7 | 2,7 | 2,7 | 2,7 |
| Lupasol WF | | 0,5 | 0,5 | 0,5 | 0,5 | 0,5 |

(fortgesetzt)

| Beispiele CK/K1 | 12 | 13 | 14 | 15 | 16 | 18 |
|---|---|---|---|---|---|---|
| Eisenpulver (CIP) | | | 1 | 1 | 1 | 1 |
| | | | | | | |
| MZ: | | | | | | |
| PA66 (Relative Viskosität) | 2,7 | 2,7 | 2,7 | 2,7 | 2,7 | 2,7 |
| Lupasol WF | | 0,5 | 0,5 | | 0,5 | |
| Eisenpulver (CIP) | | 1 | | | 1 | 1 |
| Wärmealterungstemperatur: | 220°C | 220°C | 220°C | 220°C | 220°C | 220°C |
| | | | | | | |
| Abnahme der Biegefestigkeit nach 1000h: | -44% | -35% | keine | keine | keine | keine |
| Abnahme der Biegefestigkeit nach 2000h. | Nicht mehr vorhan den | -70% | -3% | -5% | -3% | -4% |

Tabelle 5

| Beispiele CK/K1+K2: | 12a) | 13a) | 13b) | 12b) | 16a) | 16b) | 18a) |
|---|---|---|---|---|---|---|---|
| | | | | | | | |
| K1 | 12 | 13 | 13 | 12 | 16 | 16 | 18 |
| | | | | | | | |
| K2 | | | | | | | |
| PA6 (Relative Viskosität) | 2,7 | 2,7 | 2,7 | 2,7 | 2,7 | 2,7 | 2,7 |
| Lupasol WF | | 0,5 | 0,5 | 0,5 | 0,5 | 0,5 | 0,5 |
| Eisenpulver (CIP) | | | 1 | 1 | 1 | | 1 |
| | | | | | | | |
| Wärmealterungstemperat ur (1000h): | 220° C | 220° C | 220°C | 220° C | 220° C | 220°C | 220° |
| | | | | | | | |
| Zugfestigkeit (MPa): | 5 | 7 | 5 | 4 | 16 | 11 | 16 |

**Patentansprüche**

1.  Compositkunststoffteil (CK) enthaltend

    i) eine erste Kunststoffkomponente (K1) enthaltend

        ia) eine Matrixzusammensetzung (MZ), die ein Polyamidmatrixpolymer (PAM) und mindestens ein erstes Fasermaterial (F1) zur Verstärkung enthält,
        und
        ib) eine Oberflächenzusammensetzung (OZ), die ein Polyamidoberflächenpolymer (PAO) enthält und eine Oberfläche von K1 bildet,

    wobei
    die Oberflächenzusammensetzung (OZ) ein Polyethylenimin (PEI) zur Verbesserung der Wärmealterungsbeständigkeit des Compositkunststoffteils (CK) enthält, und wobei die Matrixzusammensetzung (MZ) kein Polyethylenimin (PEI) enthält.

2.  Compositkunststoffteil (CK) gemäß Anspruch 1, **dadurch gekennzeichnet, dass** das Compositkunststoffteil (CK) zusätzlich

ii) eine zweite Kunststoffkomponente (K2), die ein Polyamidanformungspolymer (PAA) enthält und an die Oberfläche von K1 angeformt ist,

enthält.

3. Compositkunststoffteil (CK) gemäß Anspruch 1 oder 2, **dadurch gekennzeichnet, dass** das Polyethylenimin (PEI) ein gewichtsmittleres Molekulargewicht $M_w$ im Bereich von 600 bis 300 000 g/mol hat.

4. Compositkunststoffteil (CK) gemäß einem der Ansprüche 1 bis 3, **dadurch gekennzeichnet, dass** das Polyethylenimin (PEI) primäre, sekundäre und tertiäre Aminogruppen enthält, wobei das Verhältnis von primären zu sekundären zu tertiären Aminogruppen im Bereich von 1 : 0,8 : 0,5 bis 1 : 1,3 : 0,8 liegt.

5. Compositkunststoffteil (CK) gemäß einem der Ansprüche 1 bis 4, **dadurch gekennzeichnet, dass** das Polyethylenimin (PEI) ein hyperverzweigtes Polymer mit einem Verzweigungsgrad DB im Bereich von 10 bis 99 % ist, wobei DB definiert ist als DB (%) = 100 x (T + Z) / (T + Z + L), wobei T die mittlere Anzahl der terminal gebundenen Monomereinheiten, Z die mittlere Anzahl der Verzweigungen bildenden Monomereinheiten und L die mittlere Anzahl der linear gebundenen Monomereinheiten in dem Polyethylenimin (PEI) bedeuten.

6. Compositkunststoffteil (CK) gemäß einem der Ansprüche 1 bis 5, **dadurch gekennzeichnet, dass** das Compositkunststoffteil (CK) 0,01 bis 5 Gew.-% Polyethylenimin (PEI) enthält, bezogen auf das Gesamtgewicht des Compositkunststoffteils (CK).

7. Compositkunststoffteil (CK) gemäß einem der Ansprüche 2 bis 6, **dadurch gekennzeichnet, dass** OZ und K2 Polyethylenimin (PEI) enthalten.

8. Compositkunststoffteil (CK) gemäß einem der Ansprüche 1 bis 7, **dadurch gekennzeichnet, dass** das erste Fasermaterial (F1) ein Endlosfasermaterial ist.

9. Compositkunststoffteil (CK) gemäß einem der Ansprüche 1 bis 8, **dadurch gekennzeichnet, dass** K2 ein zweites Fasermaterial (F2) enthält, wobei das zweite Fasermaterial (F2) ein Kurzfasermaterial ist.

10. Compositkunststoffteil (CK) gemäß einem der Ansprüche 1 bis 9, **dadurch gekennzeichnet, dass** OZ und/oder K2 Eisenpulver (CIP) enthalten.

11. Verfahren zur Herstellung eines Compositkunststoffteils (CK) gemäß einem der Ansprüche 2 bis 10, umfassend die folgenden Schritte

a) Bereitstellen einer ersten Kunststoffkomponente (K1) enthaltend

ia) eine Matrixzusammensetzung (MZ), die ein Polyamidmatrixpolymer (PAM) und mindestens ein erstes Fasermaterial (F1) zur Verstärkung enthält, und
ib) eine Oberflächenzusammensetzung (OZ), die ein Polyamidoberflächenpolymer (PAO) enthält und eine Oberfläche von K1 bildet, und

b) Anformen einer zweiten Kunststoffkomponente (K2), die ein Polyamidanformungspolymer (PAA) enthält, an die Oberfläche von K1, wobei
OZ und gegebenenfalls K2 ein Polyethylenimin (PEI) zur Verbesserung der Wärmealterungsbeständigkeit des Compositkunststoffteils (CK) enthält.

12. Verfahren gemäß Anspruch 11, **dadurch gekennzeichnet, dass** in Schritt a) K1 in ein Formwerkzeug eingelegt wird und in Schritt b) K2 in geschmolzenem Zustand in das Formwerkzeug eingespritzt wird.

13. Verwendung von Polyethylenimin (PEI) zur Verbesserung der Wärmealterungsbeständigkeit eines Compositkunststoffteils (CK) gemäß einem der Ansprüche 1 bis 10, wobei CK

i) eine erste Kunststoffkomponente (K1) enthaltend

ia) eine Matrixzusammensetzung (MZ), die ein Polyamidmatrixpolymer (PAM) und mindestens ein erstes Fasermaterial (F1) zur Verstärkung enthält,
und
ib) eine Oberflächenzusammensetzung (OZ), die ein Polyamidoberflächenpolymer (PAO) enthält und eine Oberfläche von K1 bildet,

wobei
die Oberflächenzusammensetzung (OZ) ein Polyethylenimin (PEI) zur Verbesserung der Wärmealterungsbeständigkeit des Compositkunststoffteils (CK) enthält.

14. Verwendung gemäß Anspruch 13, **dadurch gekennzeichnet, dass** das Compositkunststoffteil zusätzlich

ii) eine zweite Kunststoffkomponente (K2), die ein Polyamidanformungspolymer (PAA) enthält und an die Oberfläche von K1 angeformt ist,

enthält.

15. Verfahren zur Verbesserung der Wärmealterungsbeständigkeit eines Compositkunststoffteils (CK), umfassend die folgenden Schritte

a) Bereitstellen einer ersten Kunststoffkomponente (K1) enthaltend

ia) eine Matrixzusammensetzung (MZ), die ein Polyamidmatrixpolymer (PAM) und mindestens ein erstes Fasermaterial (F1) zur Verstärkung enthält,
und
ib) eine Oberflächenzusammensetzung (OZ), die ein Polyamidoberflächenpolymer (PAO) enthält und eine Oberfläche von K1 bildet,
und

b) Anformen einer zweiten Kunststoffkomponente (K2), die ein Polyamidanformungspolymer (PAA) enthält, an die Oberfläche von K1,
wobei
die Oberflächenzusammensetzung (OZ) ein Polyethylenimin (PEI) zur Verbesserung der Wärmealterungsbeständigkeit des Compositkunststoffteils (CK) enthält, wobei die Martixzusammensetzung (MZ) kein Polyethylenimin (PEI) enthält.

**Claims**

1. A plastic composite component (CC) comprising

i) a first plastic component (C1) comprising

ia) a matrix composition (MC) comprising a polyamide matrix polymer (PAM) and at least one first fiber material (F1) for reinforcement,
and
ib) a surface composition (SC) which comprises a polyamide surface polymer (PAS) and forms a surface of C1,

wherein
the surface composition (SC) comprises a polyethyleneimine (PEI) for improving the thermal aging resistance of the plastic composite component (CC), and wherein the matrix composition (MC) does not comprise any polyethyleneimine (PEI).

2. The plastic composite component (CC) according to claim 1, wherein the plastic composite component (CC) additionally comprises

ii) a second plastic component (C2) which comprises a polyamide molding polymer (PAA) and has been molded onto the surface of C1.

3. The plastic composite component (CC) according to claim 1 or 2, wherein the polyethyleneimine (PEI) has a weight-average molecular weight $M_w$ in the range from 600 to 300 000 g/mol.

4. The plastic composite component (CC) according to any of claims 1 to 3, wherein the polyethyleneimine (PEI) comprises primary, secondary and tertiary amino groups, where the ratio of primary to secondary to tertiary amino groups is in the range from 1:0.8:0.5 to 1:1.3:0.8.

5. The plastic composite component (CC) according to any of claims 1 to 4, wherein the polyethyleneimine (PEI) is a hyperbranched polymer having a degree of branching DB in the range from 10% to 99%, where DB is defined as DB (%) = 100 x (T + Z) / (T + Z + L) where T is the mean number of terminal-bonded monomer units, Z is the mean number of monomer units that form branches and L is the mean number of linear-bonded monomer units in the polyethyleneimine (PEI).

6. The plastic composite component (CC) according to any of claims 1 to 5, wherein the plastic composite component (CC) comprises 0.01% to 5% by weight of polyethyleneimine (PEI), based on the total weight of the plastic composite component (CC).

7. The plastic composite component (CC) according to any of claims 2 to 6, wherein SC and C2 comprise polyethyleneimine (PEI).

8. The plastic composite component (CC) according to any of claims 1 to 7, wherein the first fiber material (F1) is a continuous fiber material.

9. The plastic composite component (CC) according to any of claims 1 to 8, wherein C2 comprises a second fiber material (F2), the second fiber material (F2) being a short fiber material.

10. The plastic composite component (CC) according to any of claims 1 to 9, wherein SC and/or C2 comprise(s) iron powder (CIP).

11. A process for producing a plastic composite component (CC) according to any of claims 2 to 10, comprising the following steps:

    a) providing a first plastic component (C1) comprising

        ia) a matrix composition (MC) comprising a polyamide matrix polymer (PAM) and at least one first fiber material (F1) for reinforcement,
        and
        ib) a surface composition (SC) which comprises a polyamide surface polymer (PAS) and forms a surface of C1,
        and

    b) molding a second plastic component (C2) comprising a polyamide molding polymer (PAA) onto the surface of C1,

    wherein
    SC and optionally C2 comprise a polyethyleneimine (PEI) for improving the thermal aging resistance of the plastic composite component (CC).

12. The process according to claim 11, wherein, in step a), C1 is placed into a mold and, in step b), C2 is injected into the mold in the molten state.

13. The use of polyethyleneimine (PEI) for improving the thermal aging resistance of a plastic composite component (CC) according to any of claims 1 to 10, wherein CC

    i) a first plastic component (C1) comprising

ia) a matrix composition (MC) comprising a polyamide matrix polymer (PAM) and at least one first fiber material (F1) for reinforcement, and

ib) a surface composition (SC) which comprises a polyamide surface polymer (PAS) and forms a surface of C1,

wherein

the surface composition (SC) comprises a polyethyleneimine (PEI) for improving the thermal aging resistance of the plastic composite component (CC).

14. The use according to claim 13, wherein the plastic composite component additionally comprises

ii) a second plastic component (C2) which comprises a polyamide molding polymer (PAA) and has been molded onto the surface of C1.

15. A process for improving the thermal aging resistance of a plastic composite component (CC), comprising the following steps:

a) providing a first plastic component (C1) comprising

ia) a matrix composition (MC) comprising a polyamide matrix polymer (PAM) and at least one first fiber material (F1) for reinforcement, and

ib) a surface composition (SC) which comprises a polyamide surface polymer (PAS) and forms a surface of C1, and

b) molding a second plastic component (C2) comprising a polyamide molding polymer (PAA) onto the surface of C1,

wherein

the surface composition (SC) comprises a polyethyleneimine (PEI) for improving the thermal aging resistance of the plastic composite component (CC), wherein the matrix composition (MC) does not comprise any polyethyleneimine (PEI).

**Revendications**

1. Pièce en matière plastique composite (CK) contenant i) un premier composant en matière plastique (K1) contenant

ia) une composition de matrice (MZ), qui contient un polymère de matrice de polyamide (PAM) et au moins un premier matériau fibreux (F1) pour le renforcement, et

ib) une composition de surface (OZ), qui contient un polymère de surface de polyamide (PAO) et forme une surface de K1,

la composition de surface (OZ) contenant une polyéthylène-imine (PEI) pour l'amélioration de la résistance au vieillissement à la chaleur de la pièce en matière plastique composite (CK), et la composition de matrice (MZ) ne contenant pas de polyéthylène-imine (PEI).

2. Pièce en matière plastique composite (CK) selon la revendication 1, **caractérisée en ce que** la pièce en matière plastique composite (CK) contient en outre ii) un deuxième composant en matière plastique (K2), qui contient un polymère de moulage de polyamide (PAA) et est moulé sur la surface de K1.

3. Pièce en matière plastique composite (CK) selon la revendication 1 ou 2, **caractérisée en ce que** la polyéthylène-imine (PEI) a un poids moléculaire moyen en poids $M_w$ dans la plage allant de 600 à 300 000 g/mol.

4. Pièce en matière plastique composite (CK) selon l'une quelconque des revendications 1 à 3, **caractérisée en ce que** la polyéthylène-imine (PEI) contient des groupes amino primaires, secondaires et tertiaires, le rapport entre les groupes amino primaires et secondaires et tertiaires se situant dans la plage allant de 1:0,8:0,5 à 1:1,3:0,8.

**5.** Pièce en matière plastique composite (CK) selon l'une quelconque des revendications 1 à 4, **caractérisée en ce que** la polyéthylène-imine (PEI) est un polymère hyper-ramifié ayant un degré de ramification DB dans la plage allant de 10 à 99 %, DB étant défini par DB (%) = 100 x (T+Z)/(T+Z+L), T signifiant le nombre moyen d'unités monomères reliées en position terminale, Z signifiant le nombre moyen d'unités monomères formant des ramifications et L signifiant le nombre moyen d'unités monomères reliées linéairement dans la polyéthylène-imine (PEI).

**6.** Pièce en matière plastique composite (CK) selon l'une quelconque des revendications 1 à 5, **caractérisée en ce que** la pièce en matière plastique composite (CK) contient 0,01 à 5 % en poids de polyéthylène-imine (PEI), par rapport au poids total de la pièce en matière plastique composite (CK).

**7.** Pièce en matière plastique composite (CK) selon l'une quelconque des revendications 2 à 6, **caractérisée en ce qu'**OZ et K2 contiennent la polyéthylène-imine (PEI).

**8.** Pièce en matière plastique composite (CK) selon l'une quelconque des revendications 1 à 7, **caractérisée en ce que** le premier matériau fibreux (F1) est un matériau à fibres sans fin.

**9.** Pièce en matière plastique composite (CK) selon l'une quelconque des revendications 1 à 8, **caractérisée en ce que** K2 contient un deuxième matériau fibreux (F2), le deuxième matériau fibreux (F2) étant un matériau à fibres courtes.

**10.** Pièce en matière plastique composite (CK) selon l'une quelconque des revendications 1 à 9, **caractérisée en ce qu'**OZ et/ou K2 contiennent de la poudre de fer (CIP).

**11.** Procédé de fabrication d'une pièce en matière plastique composite (CK) selon l'une quelconque des revendications 2 à 10, comprenant les étapes suivantes :

a) la préparation d'un premier composant en matière plastique (K1), contenant :

ia) une composition de matrice (MZ), qui contient un polymère de matrice de polyamide (PAM) et au moins un premier matériau fibreux (F1) pour le renforcement,
et
ib) une composition de surface (OZ), qui contient un polymère de surface de polyamide (PAO) et forme une surface de K1,

et
b) le moulage d'un deuxième composant en matière plastique (K2), qui contient un polymère de moulage de polyamide (PAA), sur la surface de K1,
OZ et éventuellement K2 contenant une polyéthylène-imine (PEI) pour l'amélioration de la résistance au vieillissement à la chaleur de la pièce en matière plastique composite (CK).

**12.** Procédé selon la revendication 11, **caractérisé en ce qu'**à l'étape a), K1 est placé dans un outil de moulage et, à l'étape b), K2 est injecté à l'état fondu dans l'outil de moulage.

**13.** Utilisation d'une polyéthylène-imine (PEI) pour l'amélioration de la résistance au vieillissement à la chaleur d'une pièce en matière plastique composite (CK) selon l'une quelconque des revendications 1 à 10, dans laquelle CK contient

i) un premier composant en matière plastique (K1) contenant

ia) une composition de matrice (MZ), qui contient un polymère de matrice de polyamide (PAM) et au moins un premier matériau fibreux (F1) pour le renforcement,
et
ib) une composition de surface (OZ), qui contient un polymère de surface de polyamide (PAO) et forme une surface de K1,

la composition de surface (OZ) contenant une polyéthylène-imine (PEI) pour l'amélioration de la résistance au vieillissement à la chaleur de la pièce en matière plastique composite (CK).

14. Utilisation selon la revendication 13, **caractérisée en ce que** la pièce en matière plastique composite contient en outre

ii) un deuxième composant en matière plastique (K2), qui contient un polymère de moulage de polyamide (PAA) et est moulé sur la surface de K1.

15. Procédé d'amélioration de la résistance au vieillissement à la chaleur d'une pièce en matière plastique composite (CK), comprenant les étapes suivantes :

a) la préparation d'un premier composant en matière plastique (K1), contenant :

ia) une composition de matrice (MZ), qui contient un polymère de matrice de polyamide (PAM) et au moins un premier matériau fibreux (F1) pour le renforcement, et
ib) une composition de surface (OZ), qui contient un polymère de surface de polyamide (PAO) et forme une surface de K1,

et
b) le moulage d'un deuxième composant en matière plastique (K2), qui contient un polymère de moulage de polyamide (PAA), sur la surface de K1,

la composition de surface (OZ) contenant une polyéthylène-imine (PEI) pour l'amélioration de la résistance au vieillissement à la chaleur de la pièce en matière plastique composite (CK), la composition de matrice (MZ) ne contenant pas de polyéthylène-imine (PEI).

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010076145 A
- WO 2011051123 A
- WO 2012058366 A
- WO 2012058359 A
- WO 2012058379 A
- EP 129195 A
- EP 129196 A
- WO 9412560 A
- DE 19931720 A
- US 4144123 A
- EP 895521 A
- EP 25515 A
- EP 675914 A
- WO 2001051123 A

**In der Beschreibung aufgeführte Nicht-Patentliteratur**

- **MARCO WACKER ; KU-KUNSTSTOFFE.** Schweißen und Umspritzen von Organoblechen. Karl Hanser Verlag München, 2002, vol. 92, 6
- **R. STOLZE.** *Kunststoffe,* 1988, vol. 78, 126-131
- **M. WACKER ; G.W. EHRENSTEIN ; C. OBERMANN.** *Kunststoffe,* 2002, vol. 92, 78-81